(19) **Europäisches Patentamt / European Patent Office / Office européen des brevets**

(11) **EP 4 524 807 A1**

(12) **EUROPEAN PATENT APPLICATION**
published in accordance with Art. 153(4) EPC

(43) Date of publication:
**19.03.2025 Bulletin 2025/12**

(21) Application number: 23803819.4

(22) Date of filing: **09.05.2023**

(51) International Patent Classification (IPC):
*G06F 30/27* (2020.01)       *G06F 30/17* (2020.01)
*G06N 3/08* (2023.01)        *G06N 3/04* (2023.01)
*G06F 111/06* (2020.01)

(52) Cooperative Patent Classification (CPC):
**G06F 30/17; G06F 30/27; G06N 3/04; G06N 3/08;**
G06F 2111/06

(86) International application number:
**PCT/KR2023/006295**

(87) International publication number:
**WO 2023/219396 (16.11.2023 Gazette 2023/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **11.05.2022   KR 20220058032**
**19.10.2022   KR 20220134996**

(71) Applicant: **Narnia Labs. Co., Ltd.**
**Daejeon 34051 (KR)**

(72) Inventors:
• **KIM, Eun Ji**
  **Daejeon 34051 (KR)**
• **YOO, So Young**
  **Daejeon 34051 (KR)**
• **SHIN, Dong Ju**
  **Daejeon 34051 (KR)**
• **KWON, Yong Min**
  **Daejeon 34051 (KR)**

(74) Representative: **Gulde & Partner**
**Patent- und Rechtsanwaltskanzlei mbB**
**Berliner Freiheit 2**
**10785 Berlin (DE)**

(54) **ARTIFICIAL INTELLIGENCE-BASED GENERATIVE DESIGN METHOD AND DEVICE, AND COMPUTER PROGRAM**

(57)     Provided in an embodiment of the present invention is an artificial intelligence-based generative design method performed by means of a computing device, comprising the steps of: generating new designs for a product; predicting the performance of the new designs; and acquiring the optimum design from among the new designs.

Fig. 2

EP 4 524 807 A1

## Description

## Technical Field

The present disclosure relates to an artificial intelligence-based generative design method, device, and computer program.

## Background Art

Generative design is a design technology using artificial intelligence software. Generative design technology is characterized by automatically generating optimal design options that satisfy customer requirement conditions from the early stages of product development by a computer.

It is essential to utilize synthetic data in order to train artificial intelligence models in an environment where data is insufficient. Synthetic data refers to data artificially generated through various automation technologies such as simulation.

However, in the case of 3D engineering data, it is difficult to build a large amount of 3D engineering data that can be used for artificial intelligence learning in actual product development sites because it is necessary to generate physically meaningful synthetic data while understanding the engineering domain which requires more technical know-how than other data.

In particular, as a design technology mainly used in products where functionality and performance are important, introducing this method can shorten the delivery period by responding to various customer demands and saving time for reviewing prototypes.

Conventional generative design technologies mainly use topology optimization technology, but topology optimization technology has the problem of not being able to utilize past design data, not being able to produce designs with superior external aesthetics, and producing designs that are unrelated to customer preferences.

[Document of Related Art]

[Patent Document]

(Patent Document 0001) Korea Patent No. 10-2079027, (Method for Topology Optimization Using Deep Learning)

## Disclosure

## Technical Problem

An exemplary embodiment of the present disclosure aims to provide an artificial intelligence-based generative design method, device, and computer program, capable of generating a product design, interpreting the performance of the design, and providing a design performance prediction and optimal design model trained with the performance of the design as training data on the basis of artificial intelligence.

An exemplary embodiment of the present disclosure aims to provide an artificial intelligence-based generative design method, device, and computer program, capable of automatically generating a plurality of product design options applicable to products on the basis of artificial intelligence by using a small amount of reference design.

An exemplary embodiment of the present disclosure aims to provide an artificial intelligence-based generative design method, device, and computer program, capable of modeling and providing optimal design options of a product corresponding to a target performance of the product demanded by a user and providing an interpretation result of interpreting the performance of the optimal design options.

An exemplary embodiment of the present disclosure aims to provide a generative design method, device, and computer program optimized on the basis of reference data and implicit neural representation, which provides a deep generative design service capable of generating a new design by using a small amount of reference data and training an artificial intelligence model with the generated new design.

An exemplary embodiment of the present disclosure aims to provide a generative design method, device, and computer program optimized on the basis of reference data and implicit neural representation, which solves simultaneously the data shortage problems and AI expert shortage problems occurring at product development sites in the manufacturing sector.

An exemplary embodiment of the present disclosure aims to provide an artificial intelligence-based generative design method, device, and computer program optimized on the basis of reference data and implicit neural representation, capable of effectively exploring new design options, which was not considered in the past, in the concept design stage and simultaneously proposing designs optimized considering various performances at a fast speed close to real-time.

**Technical Solution**

In an artificial intelligence-based generative design method performed by a computing device, an exemplary embodiment of the present disclosure provides an artificial intelligence-based generative design method which includes a process of generating a new design for a product, a process of exploring the generated new design, a process of predicting performance of the new design, and a process of obtaining an optimal design among the new designs.

An exemplary embodiment of the present disclosure provides an artificial intelligence-based generative design method, wherein the process of generating the new design for the product includes a process of obtaining a first new design by applying topology optimization to a first reference data, a process of obtaining a second new design by applying a parametric design to the first reference data, a process of additionally obtaining the second new design by applying the parametric design to the first new design, and a process of additionally obtaining the first new design by applying topology optimization to the second new design.

An exemplary embodiment of the present disclosure provides an artificial intelligence-based generative design method, wherein the process of generating the new design for the product includes a process of mapping the first new design and the second new design to one latent space by using a design generation model, and a process of using a third new design generated by the design generation model as a second reference data, wherein the first new design and the second new design can have a representation method and format different from each other.

An exemplary embodiment of the present disclosure provides an artificial intelligence-based generative design method, wherein the process of predicting the performance of the new design includes a process of interpreting the new design by using a performance interpretation module, a process of training a design performance prediction model on the basis of an interpretation result of the new design, a process of predicting the performance of the new design on the basis of the design performance prediction model, a process of providing the trained design performance prediction model when the predicted design performance satisfies a preset criterion value, and a process of re-training the design performance prediction model on the basis of the clustered additional interpretation results after clustering an additional interpretation result for the new design through an adaptive sampling when the predicted design performance does not satisfy the preset criterion value.

An exemplary embodiment of the present disclosure provides an artificial intelligence-based generative design method, wherein the process of obtaining the optimal design among the new designs includes a process of obtaining a first target performance about performance information of a target product desired by a user, a process of obtaining a first optimal design option by inputting the first target performance to an inverse design model and training to predict a second target performance identical to the first target performance by inputting the first optimal design options to a forward design model, and a process of obtaining second optimal design options by re-training the design performance prediction model through an additional interpretation result of additionally sampled design options selected by an adaptive sampling considering an uncertainty of the first optimal design.

An exemplary embodiment of the present disclosure provides an artificial intelligence-based generative design method, which further includes a process of evaluating the optimal designs, a process of accumulating some of the optimal designs as design data, a process of analyzing the design data, and a process of recommending the design data.

An exemplary embodiment of the present disclosure provides an artificial intelligence-based generative design method, wherein the process of obtaining the first optimal design options by inputting the first target performance to an inverse design model and training to predict the second target performance identical to the first target performance by inputting the first optimal design options to the forward design model includes a process of obtaining the first optimal design options by additionally inputting a user prediction preference for the design predicted in a user preference model along with the first target performance to the inverse design model.

An exemplary embodiment of the present disclosure provides an artificial intelligence-based generative design device, which includes a processor, a network interface, a memory, and a computer program that is loaded into the memory and executed by the processor, wherein the computer program includes an instruction for generating a new design for a product, an instruction for predicting the performance of the new design, and an instruction for obtaining an optimal design among the new designs.

An exemplary embodiment of the present disclosure provides an artificial intelligence-based generative design computer program stored in a computer-readable recording medium, while coupled with a computing device, in order to execute a process of generating a new design for a product, a process of predicting the performance of the new design, and a process of obtaining an optimal design among the new designs.

In an artificial intelligence-based generative design method performed by a computing device, an exemplary embodiment of the present disclosure provides an artificial intelligence-based generative design method, which includes a process of obtaining a plurality of new designs having a similarity to reference data by applying generative design to the reference data.

An exemplary embodiment of the present disclosure provides an artificial intelligence-based generative design method, which further includes a process of filtering the plurality of new designs, a process of obtaining a plurality of additional new designs generated by using a design generation model on the basis of the plurality of filtered new designs, a process of filtering the plurality of additional new designs, and a process of obtaining the plurality of new designs by applying generative design to the plurality of filtered additional new designs as the plurality of reference data.

An exemplary embodiment of the present disclosure provides an artificial intelligence-based generative design method, which further includes a process of obtaining the reference data, wherein a first reference data includes either a 2D reference data or a 3D reference data, the 2D reference data includes at least one of shape image data, pattern data, skeleton data, graph data, SDF data (distance information), depth data, implicit function data, Grammar, and multi-view data obtained from each form of data, and the 3D reference data includes at least one of CAD data, voxel data, Mesh data, pointcloud data, Octree data, shape parameter data, pattern data, skeleton data, graph data, SDF data (distance information), and implicit function data (function expression or deep learning model).

An exemplary embodiment of the present disclosure provides an artificial intelligence-based generative design method, wherein generative design uses at least one of (i) a topology optimization methodology using at least one of SIMP, ESO, BESO, LevelSet, MMC, and deep learning, (ii) a size and shape optimization methodology, and (iii) a parametric design methodology.

An exemplary embodiment of the present disclosure provides an artificial intelligence-based generative design method, wherein (i) an objective function of generative design is composed of a performance function part corresponding to a requirement factor inputted by a user and a similarity function part for determining a similarity to the reference data, or (ii) a sensitivity function of generative design is composed of part of differentiating a performance function corresponding to a requirement factor inputted by a user and a similarity function part for determining a similarity to the reference data.

An exemplary embodiment of the present disclosure provides an artificial intelligence-based generative design method, wherein the process of filtering the plurality of new designs or additional new designs includes at least one of a process of filtering the performance of the new design and a process of filtering a similarity, wherein the process of filtering the performance of the new design filters out low-performance new designs through an evaluation of requirement factors set by a user, and the process of filtering the similarity filters by evaluating the similarity on a high-dimensional domain where the shape of the new design exists, or filters by evaluating the similarity by mapping the shape of the new design onto a low-dimensional domain.

An exemplary embodiment of the present disclosure provides an artificial intelligence-based generative design method, wherein the design generation model includes at least one of a deep learning model, a Boolean model, a morphing model, and an interpolation model.

An exemplary embodiment of the present disclosure provides an artificial intelligence-based generative design method, which includes a process of obtaining a plurality of design mapping data by training an implicit neural representation model using the plurality of new designs and by mapping the plurality of new designs into a low-dimensional, continuous, and parametric space (z), and at least one of a design exploration process, a design interpolation process, a design performance prediction process, a design optimization process, and an inverse design process of design by using the plurality of design mapping data in the low-dimensional, continuous, and parametric space (z).

An exemplary embodiment of the present disclosure provides an artificial intelligence-based generative design method, wherein the design optimization process performs topology optimization by applying a topology optimization technique for the plurality of design mapping data in the low-dimensional continuous and parametric space (z).

An exemplary embodiment of the present disclosure provides an artificial intelligence-based generative design device, which includes a processor, a network interface, a memory, and a computer program that is loaded into the memory and executed by the processor, wherein the computer program provides an instruction for obtaining a plurality of new designs having a similarity to reference data by applying generative design to the reference data for a product.

An exemplary embodiment of the present disclosure provides an artificial intelligence-based generative design computer program stored in a computer-readable recording medium, while coupled with a computing device, in order to execute a process of obtaining the plurality of new designs having similarity to the reference data by applying generative design to the reference data for the product.

In a method performed by a computing device, an exemplary embodiment of the present disclosure provides an artificial intelligence-based generative design method, which includes a process of obtaining a plurality of design mapping data (Z) by mapping a plurality of designs (X) for a product into a low-dimensional latent space (z) by using an implicit neural representation model, and at least one of a design exploration process, a design interpolation process, a design performance prediction process, a design optimization process, and an inverse design process of design by using the plurality of design mapping data in the latent space (z).

An exemplary embodiment of the present disclosure provides an artificial intelligence-based generative design method, wherein the design exploration process explores a first design mapping data (Z1) among the plurality of design mapping data (Z) in the latent space (z) and obtains a first design (X1) corresponding to the first design mapping data (Z1).

An exemplary embodiment of the present disclosure provides an artificial intelligence-based generative design method, wherein the design interpolation process selects the number of N data from the plurality of design mapping data (Z) in the latent space (z), interpolates the same into a second design mapping data (Z2) through an interpolation method, and obtains a second design (X2) corresponding to the interpolated second design mapping data (Z2).

An exemplary embodiment of the present disclosure provides an artificial intelligence-based generative design method, wherein the design prediction process predicts prediction performance data (Y3') through a third design mapping data (Z3) for a third design (X3) by using a performance prediction model trained with the plurality of design mapping data (Z) of the latent space (z) and the performance data (Y) of the plurality of designs (X) corresponding to the plurality of design mapping data (Z).

An exemplary embodiment of the present disclosure provides an artificial intelligence-based generative design method, wherein the design optimization process optimizes a fourth design mapping data (Z4) corresponding to a fourth design (X4) within the latent space (z) and obtains an optimized fourth design (X4') on the basis of the performance data (Y) of the plurality of designs (X).

An exemplary embodiment of the present disclosure provides an artificial intelligence-based generative design method, wherein the inverse design process obtains a fifth design mapping data ($Z_5$) corresponding to a fifth performance data ($Y_5$) and obtains a fifth design data ($X_5$) corresponding to the fifth design mapping data ($Z_5$) by using the inverse design model trained with the performance data (Y) of the latent space (z) and the plurality of design mapping data (Z) corresponding to the performance data (Y).

**Advantageous Effects**

An exemplary embodiment of the present disclosure provides an artificial intelligence-based generative design method, device, and computer program, capable of providing a generation technology of 2D/3D design data on the basis of 2D/3D deep learning-based generative design technology.

An exemplary embodiment of the present disclosure provides an artificial intelligence-based generative design method, device, and computer program, capable of constructing a mass generation system of engineered 3D design data and providing 2D/3D deep learning-based inverse design technology, which enables real-time optimal design, by using an artificial intelligence model in the design process.

An exemplary embodiment of the present disclosure provides a generative design method, device, and computer program optimized on the basis of reference data and implicit neural representation, which enables a new design by reflecting reference data for multi-views of a product when designing a concept for a product.

An exemplary embodiment of the present disclosure provides a generative design method, device, and computer program optimized on the basis of reference data and implicit neural representation, which provides a three-dimensional new design of a product having aesthetics for multi-views desired by a user while satisfying the performance for the product.

An exemplary embodiment of the present disclosure provides a generative design method, device, and computer program optimized on the basis of reference data and implicit neural representation, capable of generating synthetic data for training an artificial intelligence model by processing the data mapped in the latent space (z) after mapping all seed data to a low-dimensional latent space (z) through deep learning.

An exemplary embodiment of the present disclosure provides a generative design method, device, and computer program optimized on the basis of reference data and implicit neural representation, capable of generating and exploring design data in real time by using design mapping data of a low-dimensional space.

An exemplary embodiment of the present disclosure provides an artificial intelligence-based generative design method, device, and computer program, which construct a design recommendation system by securing dimensionality reduction, feature extraction, and clustering technology for a 2D/3D design data set.

An exemplary embodiment of the present disclosure provides a generative design method, device, and computer program optimized on the basis of reference data and implicit neural representation, capable of exploring various designs satisfying design requirement factors in a low-dimensional space (z) called a design space.

An exemplary embodiment of the present disclosure provides a generative design method, device, and computer program optimized on the basis of reference data and implicit neural representation, capable of generating a design satisfying the engineering requirement factors of a product.

An exemplary embodiment of the present disclosure provides a generative design method, device, and computer program optimized on the basis of reference data and implicit neural representation, which provide a method for auto-labeling the generated new design through CAE interpretation automation.

An exemplary embodiment of the present disclosure provides an artificial intelligence-based generative design method, device, and computer program, capable of providing a solution for artificial intelligence-based design validation and evaluation.

An exemplary embodiment of the present disclosure provides an artificial intelligence-based generative design method, device, and computer program, capable of generating a large amount of design data on the basis of artificial intelligence by using a small amount of design data.

An exemplary embodiment of the present disclosure provides an artificial intelligence-based generative design method, device, and computer program, capable of providing a full stack technology available from product design to production by providing an organically connected design generation artificial intelligence model, a design evaluation artificial intelligence model, and a design recommendation artificial intelligence model.

Description of Drawings

FIG. 1 is a view showing a hardware configuration of an artificial intelligence-based generative design device according to an exemplary embodiment of the present disclosure.

FIG. 2 is a flowchart of an artificial intelligence-based generative design method according to an exemplary embodiment of the present disclosure.

FIGS. 3a to 3d are conceptual block diagrams of an artificial intelligence-based generative design method according to an exemplary embodiment of the present disclosure. FIGS. 3a to 3d are segmented diagrams of an entire conceptual block diagram connected to each other by arrows and corresponding alphabets.

FIG. 4 is a flowchart of a process of generating a design based on artificial intelligence, and reference data and implicit neural representation according to an exemplary embodiment of the present disclosure.

FIGS. 5a to 5d are conceptual block diagrams of a process of generating a design based on artificial intelligence, and reference data and implicit neural representation according to an exemplary embodiment of the present disclosure. FIGS. 5b to 5d are conceptual block diagrams respectively corresponding to X, Y, and Z of FIG. 5a.

FIGS. 6a to 6d are views showing examples of design generation according to an exemplary embodiment of the present disclosure. (Examples of FIGS. 5a to 5d)

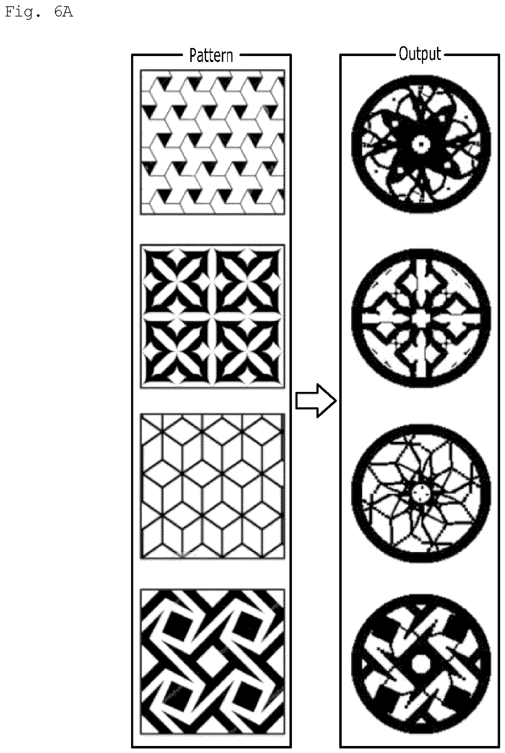

FIG. 6a is an example of design generation referring to a pattern image.

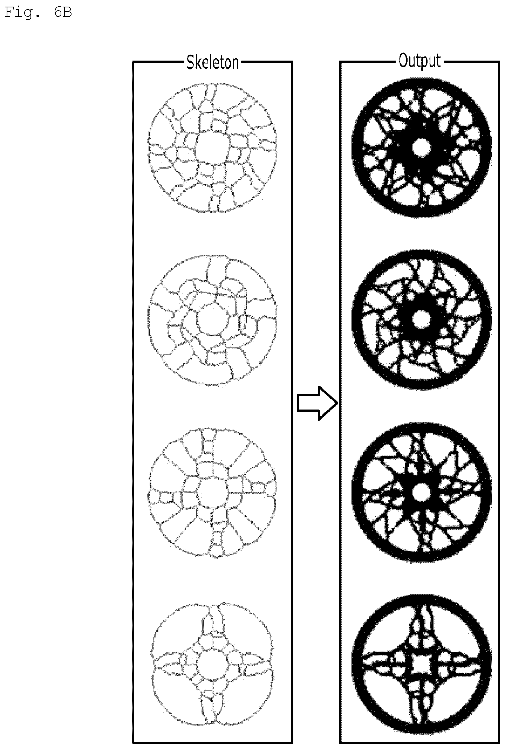

FIG. 6b is an example of design generation referring to a skeleton data.

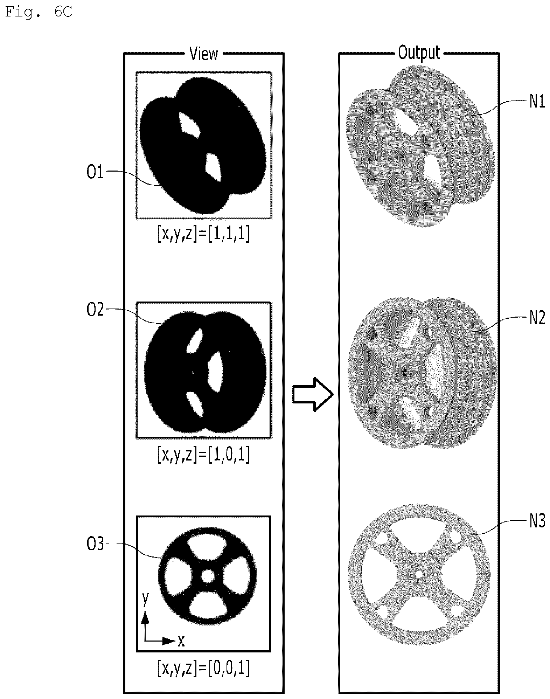

FIG. 6c is an example of design generation utilizing a viewpoint image or a cross-section image.

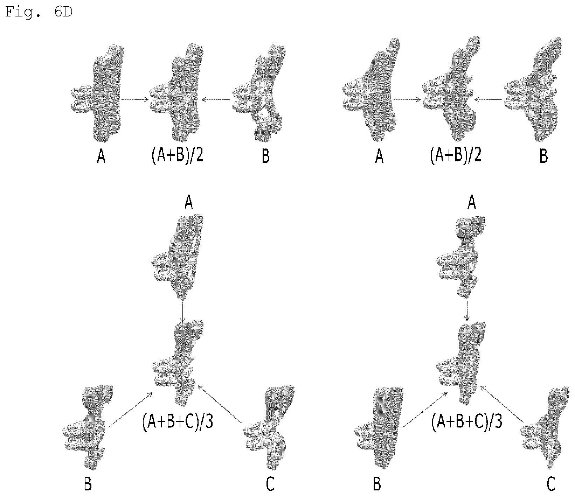

FIG. 6d is an example of design generation through design interpolation in a latent space (z).

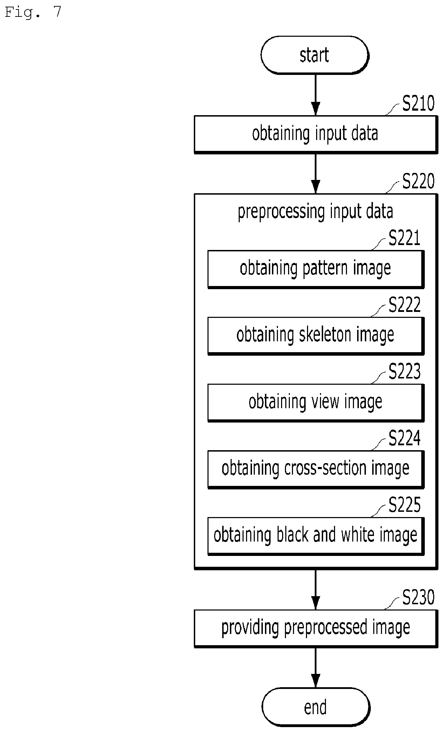

FIG. 7 is a flowchart of a process of obtaining reference data in a generative design method based on reference data and implicit neural representation according to an exemplary embodiment of the present disclosure.

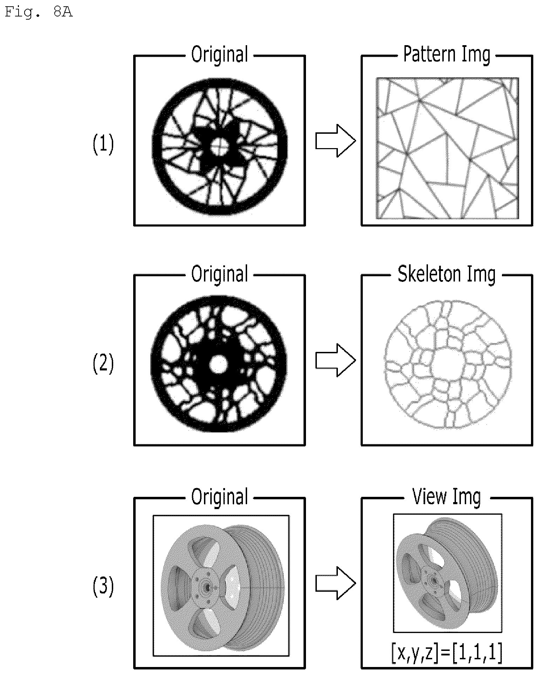

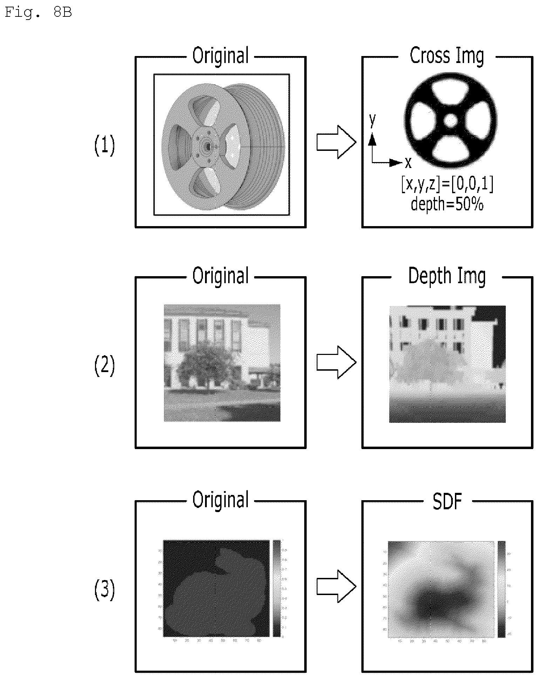

FIGS. 8a and 8b are view showing examples of reference data generated by preprocessing input data.

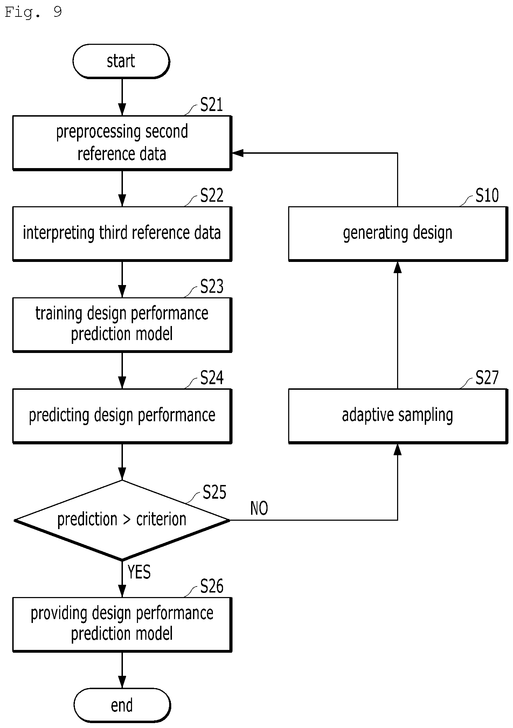

FIG. 9 is a flowchart of a process of predicting performance of a design in an artificial intelligence-based generative design method according to an exemplary embodiment of the present disclosure.

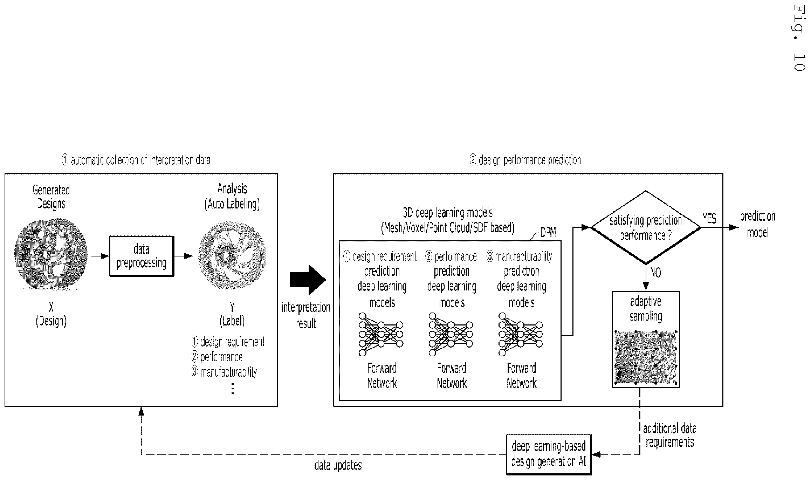

FIG. 10 is a conceptual block diagram of a process of predicting design performance according to an exemplary embodiment of the present disclosure.

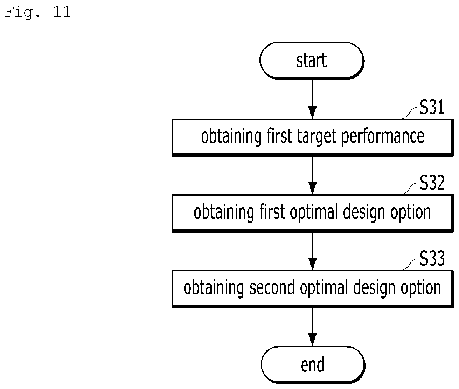

FIG. 11 is a flowchart of a process of obtaining an optimal design in an artificial intelligence-based generative design method according to an exemplary embodiment of the present disclosure.

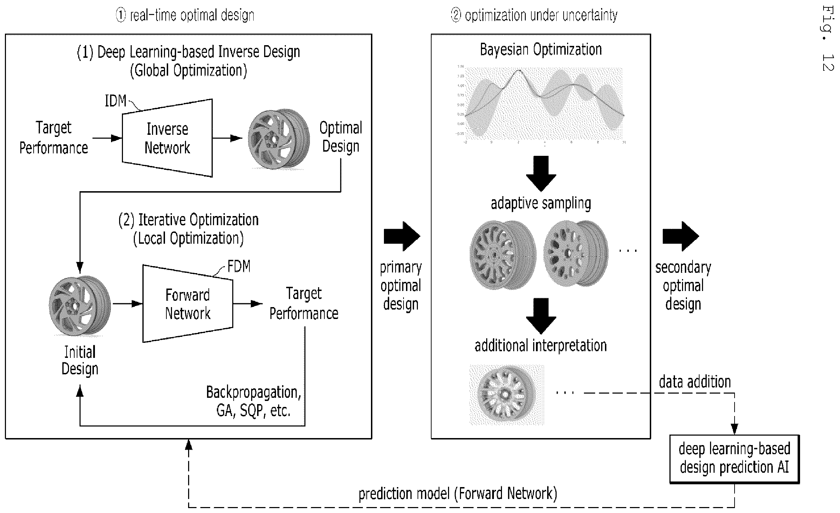

FIG. 12 is a conceptual block diagram of a process of obtaining an optimal design according to an exemplary embodiment of the present disclosure.

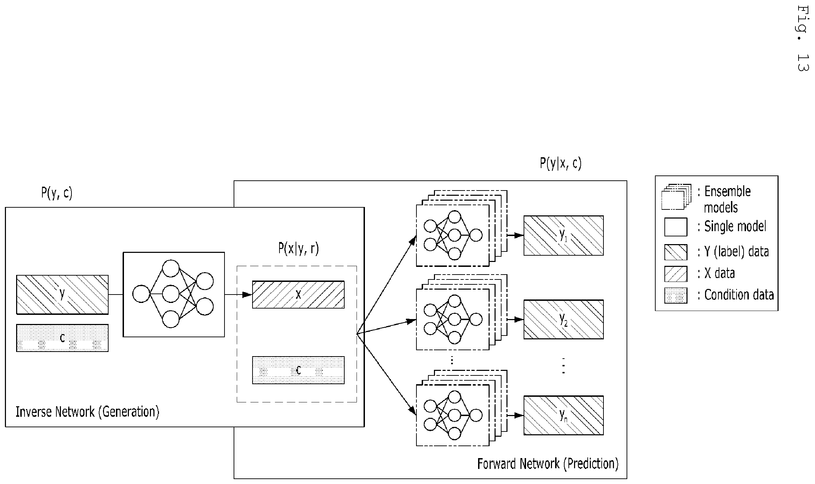

FIG. 13 is a conceptual diagram of a deep learning-based optimal design model according to an exemplary embodiment of the present disclosure.

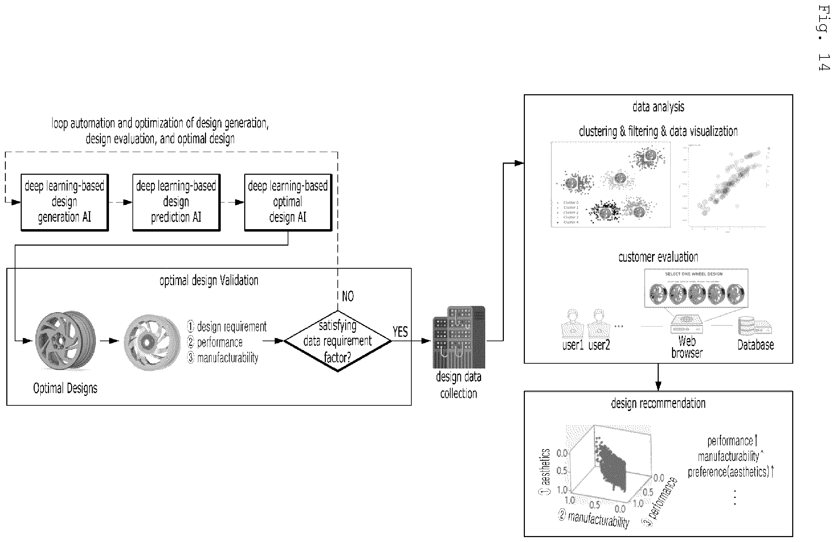

FIG. 14 is a conceptual block diagram of a process of evaluating an optimal design, accumulating design data, analyzing design data, and recommending design data according to an exemplary embodiment of the present disclosure.

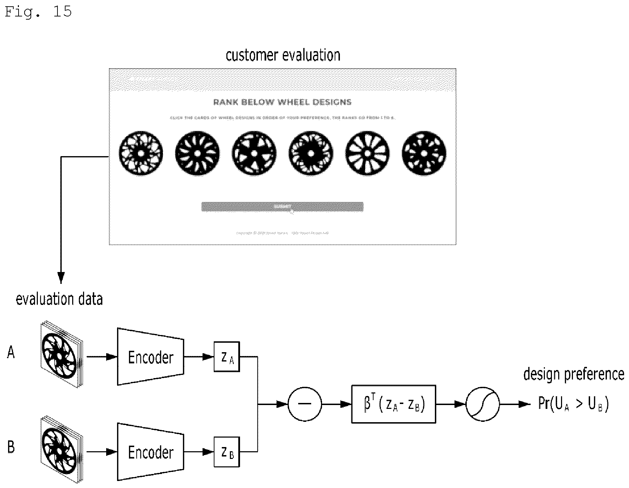

FIG. 15 is a conceptual block diagram of a method of clustering preference information on design data and predicting a preference design by using a trained preference prediction model according to an exemplary embodiment of the present disclosure.

Mode for Invention

Exemplary embodiments of the present disclosure can have various modifications, so exemplary embodiments are illustrated in the drawings and will be described in detail in the present specification. However, this is not intended to limit the exemplary embodiments of the present disclosure to any particular form, but rather to include all modifications, equivalents, or substitutions that are within the scope of the ideas and techniques of the present disclosure.

The terms used in the present specification are intended to illustrate exemplary embodiments and are not intended to limit the present disclosure. In the present specification, the singular form also includes the plural form unless specifically stated in the phrase. The terms "comprises" and/or "comprising" used in the specification do not exclude the presence or addition of one or more other components in addition to those mentioned. Throughout the specification, the same reference numerals refer to the same components, and "and/or" includes each of the mentioned components and all combinations of one or more. Although "a first", "a second", "third", and the like are used to describe various components, the components are not limited by these terms. These terms are used only to distinguish one component from another component. Accordingly, it should be understood that the first component mentioned below may also be the second component within the technical idea of the present disclosure. In the present specification, the meaning of including at least one of A, B, C, and D is to include all combinations of one or more of A, B, C, and D.

Without other definitions, all terms (including technical and scientific terms) used in this specification may be used in terms commonly understood by those skilled in the art to which the present disclosure belongs. In addition, terms defined in commonly used dictionaries are not ideally or excessively interpreted unless clearly and specifically defined.

The term "part" or "module" used in the specification refers to a hardware component such as software, FPGA, or ASIC, and "part" or "module" performs certain roles. However, "part" or "module" is not limited to software or hardware. The "part" or "module" may be configured to reside on an addressable storage medium and may be configured to execute one or more processors. Thus, as an example, "part" or "module" may include components such as software components, object-oriented software components, class components, and task components, as well as processes, functions, attributes, procedures, subroutines, segments of program code, drivers, firmware, microcode, circuitry, data, database, data structures, tables, arrays and variables. The functionality provided within components and "part" or "module" may be combined into a smaller number of components and "part" or "module" or further separated into additional components and "part" or "module".

Spatially relative terms such as "below", "beneath", "lower", "above", "upper", and the like may be used to facilitate the description of the relationship of one component to another as shown in the drawings. Spatially relative terms should be understood as terms including different directions of components when used or operated in addition to the directions shown in the drawing. For example, when a component depicted in a drawing is flipped, a component described as "below" or "beneath" another component may be placed "above" the other component. Therefore, the exemplary term "below" may include both downward and upward directions. A component may be oriented in different directions, and thus spatially relative terms may be interpreted according to orientation.

Hereinafter, an artificial intelligence-based generative design method, device, and computer program according to an exemplary embodiment of the present disclosure will be described in detail with reference to the accompanying drawings.

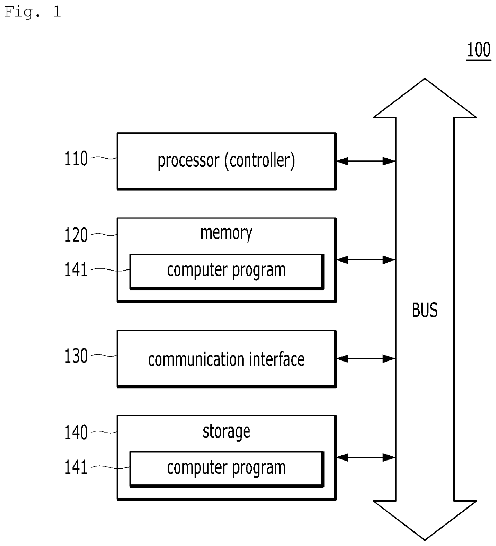

FIG. 1 is a view showing a hardware configuration of an artificial intelligence-based generative design device according to an exemplary embodiment of the present disclosure.

Referring to FIG. 1, an artificial intelligence-based generative design device 100 (hereinafter, "computing device 100") according to an exemplary embodiment of the present disclosure may include one or more processors 110, a memory 120 for loading a computer program 141 performed by the processor 110, a communication interface 130, and a storage 140 for storing the computer program 141.

Herein, the artificial intelligence-based generative design device 100 according to an exemplary embodiment of the present disclosure may be not limited to the components shown in FIG. 1, and may further include other general components.

In various exemplary embodiments, the computing device 100 may refer to all types of hardware devices including at least one processor 110, and may be understood as encompassing a software configuration operating in the corresponding hardware device according to an exemplary embodiment.

The computing device 100 may be understood to include, but is not limited to, all user clients and applications operating on a server, a smartphone, a tablet PC, a desktop, a notebook computer, and a device.

Each process of the artificial intelligence-based generative design method according to an exemplary embodiment of the present disclosure may be described as being performed by the computing device 100, but an agent of each process is not limited thereto, and at least some of each process may be performed in different computing devices according to an exemplary embodiment.

The processor 110 may control the overall operations of each component of the computing device 100. The processor 110 may be configured to include a central processing unit (CPU), a micro processor unit (MPU), a micro controller unit (MCU), a graphics processing unit (GPU), or any type of processor well known in the technical field of the present disclosure.

In addition, the processor 110 may perform an operation for at least one application or program for executing the artificial intelligence-based generative design method according to an exemplary embodiment of the present disclosure, and the computing device 100 may be provided with one or more processors.

In addition, the processor 110 may further include a random access memory (RAM, not shown) and a read-only memory (ROM, not shown) for temporarily and/or permanently storing a signal (or data) processed internally. In addition, the processor 110 may be implemented in the form of a system-on-chip (SoC) that includes at least one of a graphics processing unit, a RAM, and a ROM.

The memory 120 may store various data, commands, and/or information. The memory 120 may load the computer program 141 from the storage 140 in order to execute the artificial intelligence-based generative design method according to an exemplary embodiment of the present disclosure. When the computer program 141 is loaded into the memory 120, the processor 110 may perform the method by executing one or more instructions constituting the computer program 141. The memory 120 may be implemented by a volatile memory such as RAM, but the technical scope of the present disclosure may be not limited thereto.

The bus may provide a communication function between components of the computing device 100. The bus may be implemented as various types of buses such as an address bus, a data bus, and a control bus.

The communication interface 130 may support wired/wireless Internet communication of the computing device 100. In addition, the communication interface 130 may support various communication methods other than Internet communication. For example, the communication interface 130 may support at least one of the short-range communication, mobile communication, and broadcast communication methods. To this end, the communication interface 130 may be configured to include a communication module well known in the technical field of the present disclosure. In some exemplary embodiments, the communication interface 130 may be omitted.

The storage 140 may non-temporarily store the computer program 141. The storage 140 may include a nonvolatile memory such as a read-only memory (ROM), an erasable programmable ROM (EPROM), an electrically erasable programmable ROM (EEPROM), a flash memory, and the like, a hard disk, a removable disk, or any type of computer-readable recording medium well known in the technical field to which the present disclosure belongs.

The computer program 141 may include one or more instructions that enable the processor 110 to perform the artificial intelligence-based generative design method according to exemplary embodiments of the present disclosure when loaded into the memory 120. That is, the processor 110 may perform the method according to various exemplary embodiments of the present disclosure by executing one or more instructions.

The processes of the artificial intelligence-based generative design method according to an exemplary embodiment of the present disclosure may be implemented directly as hardware, implemented as a software module executed by the hardware, or as a combination thereof. The software module may reside in a random access memory (RAM), a read only memory (ROM), an erasable programmable ROM (EPROM), an electrically erasable programmable ROM (EEPROM), a flash memory, a hard disk, a removable disk, a CD-ROM, or any type of computer-readable recording medium well known in the technical field to which the present disclosure belongs.

The processes of the artificial intelligence-based generative design method according to an exemplary embodiment of the present disclosure may be implemented as a program (or application) and stored on a medium in order to be executed in combination with a computer, which is hardware. The components of the present disclosure may be executed in software programming or software elements, and similarly, exemplary embodiments may be implemented in a programming or scripting language such as C, C++, Java, assembler, and the like, including various algorithms implemented as a combination of data structures, processes, routines, or other programming constructs. Functional aspects may be implemented as algorithms executed in one or more processors.

Hereinafter, an artificial intelligence-based generative design method according to an exemplary embodiment of the present disclosure will be described.

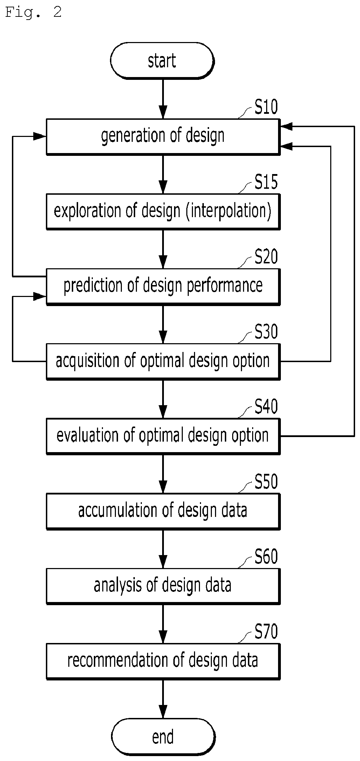

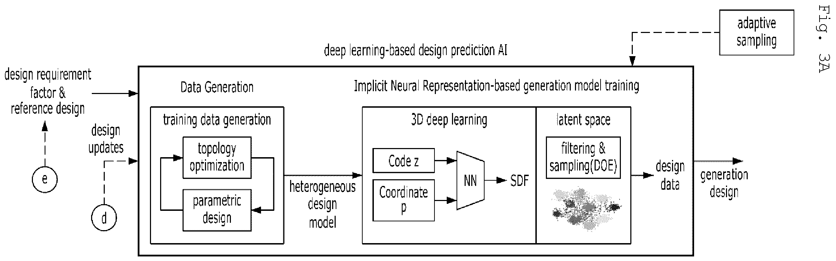

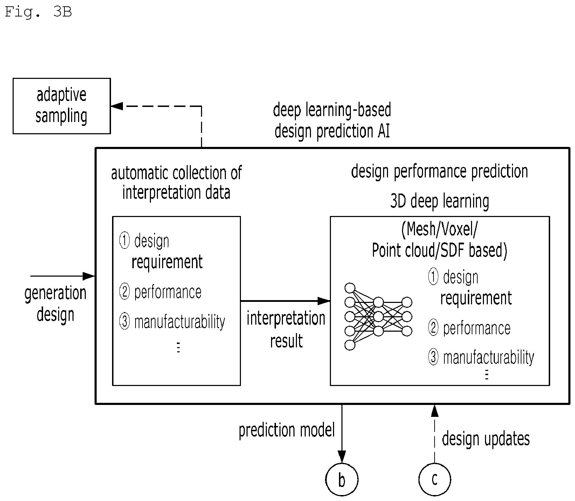

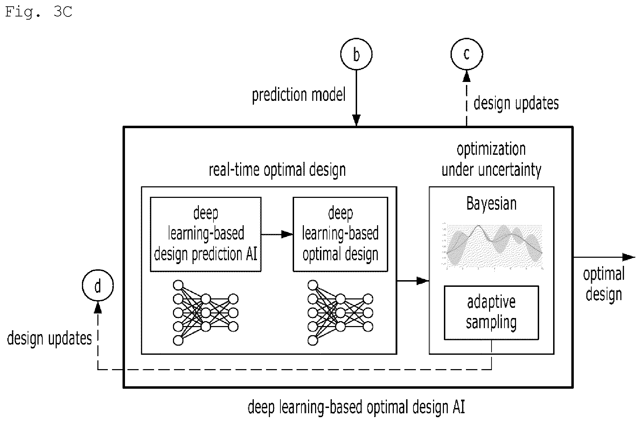

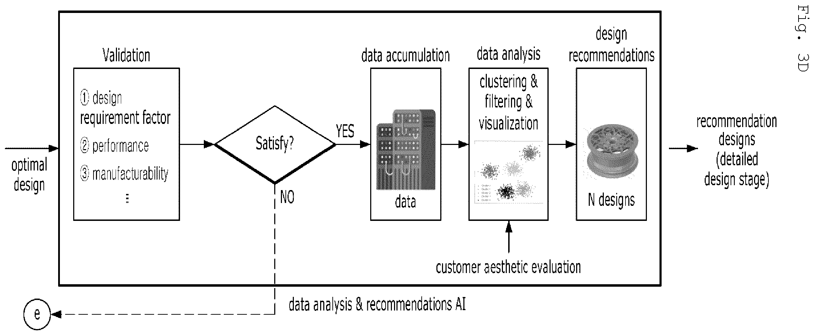

FIG. 2 is a flowchart of an artificial intelligence-based generative design method according to an exemplary embodiment of the present disclosure. FIGS. 3a to 3d are conceptual block diagrams of an artificial intelligence-based generative design method according to an exemplary embodiment of the present disclosure.

Referring to FIGS. 2 to 3d, the artificial intelligence-based generative design method according to an exemplary embodiment of the present disclosure may include at least one of a design generation process (S10), a design exploration process (S15), a design performance prediction process (S20), an optimal design option acquisition process (S30), an optimal design option evaluation process (S40), a design data accumulation process (S50), a design data analysis process (S60), and a design data recommendation process (S70).

The artificial intelligence-based generative design method according to an exemplary embodiment of the present disclosure may generate, evaluate, and recommend a design for a product on the basis of artificial intelligence. Herein, the product may be any structure having a shape or appearance. Examples may include automobiles, automobile tires, automobile wheels, watches, smartphones, bridges, buildings, and the like.

For convenience of explanation, the present specification may be described concerning a wheel of an automobile. However, the scope of the present disclosure may be not limited to a wheel of an automobile, and may be applied to all products that can be designed.

Hereinafter, a process S10 of generating a design in the artificial intelligence-based generative design method according to an exemplary embodiment of the present disclosure will be described.

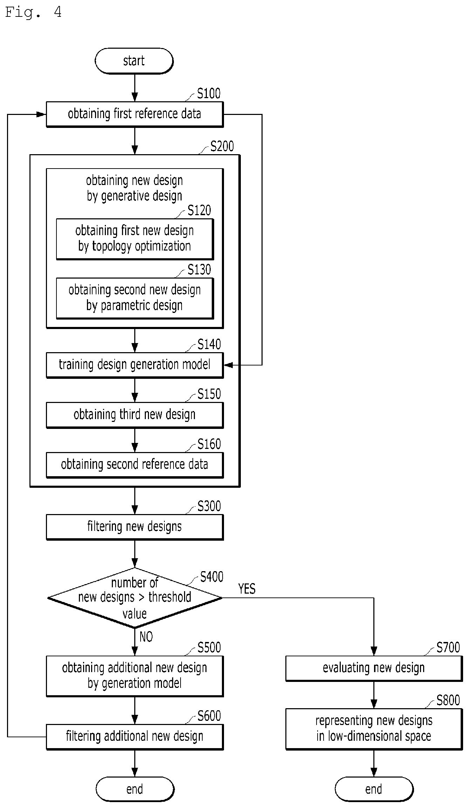

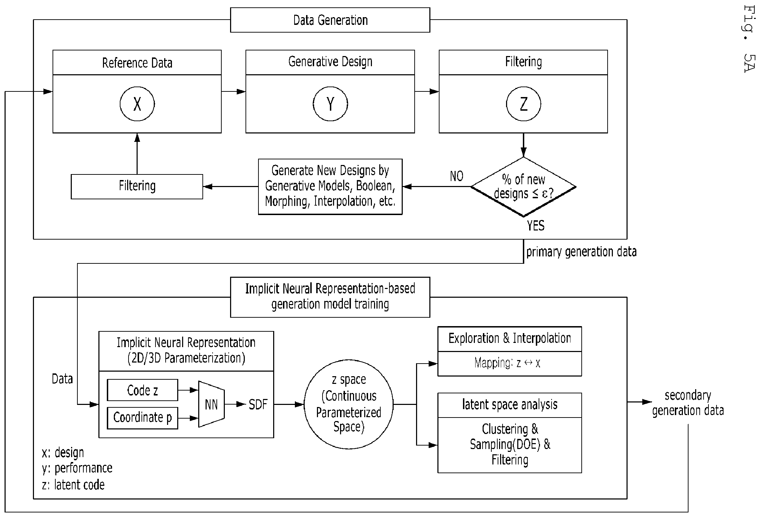

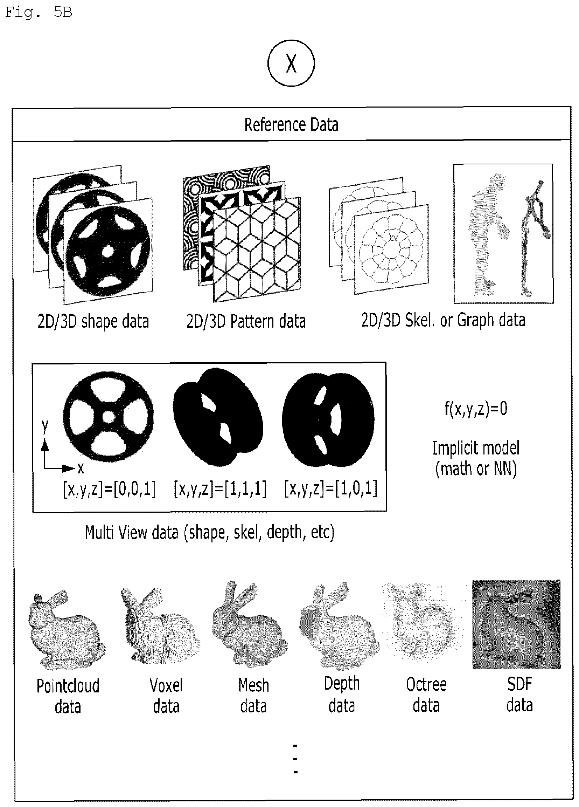

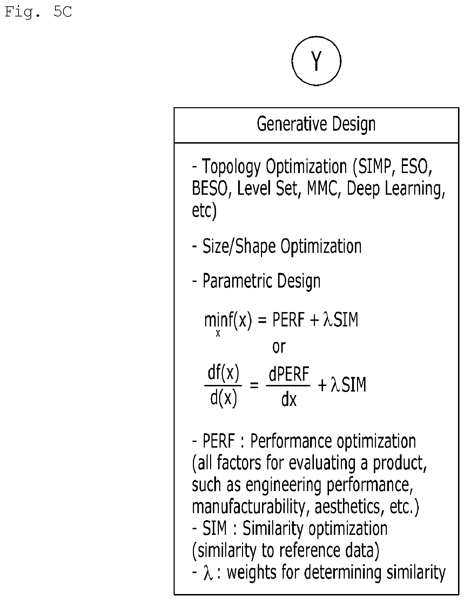

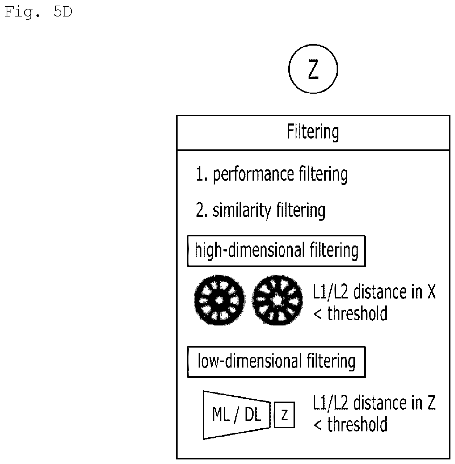

FIG. 4 is a flowchart showing a process of generating a design based on artificial intelligence, and reference data and implicit neural representation according to an exemplary embodiment of the present disclosure. FIGS. 5a to 5d are conceptual block diagrams showing a process of generating a design based on artificial intelligence, and reference data and implicit neural representation according to an exemplary embodiment of the present disclosure. FIGS. 6a to 6d are views showing examples of design generation according to an exemplary embodiment of the present disclosure.

In the S10 process, the computing device 100 may generate a second reference data by using a first reference data. The computing device 100 may generate a relatively large number of the second reference data by using a small number of the first reference data.

In other words, the computing device 100 may generate and evaluate a new design of the product by using the reference data. Herein, the product may be any structure having a shape or appearance. Examples may include automobiles, automobile tires, automobile wheels, watches, smartphones, bridges, buildings, and the like. For convenience of explanation, the present specification may be described concerning a wheel of an automobile. However, the scope of the present disclosure may be not limited to a wheel of an automobile, and may be applied to all products that can be designed.

Referring to FIGS. 4 to 5d, the design generation method (S10) according to an exemplary embodiment of the present disclosure may include at least one of a process of obtaining a first reference data (S100), a process of obtaining a new design by generative design (S200), a process of filtering a new design (S300), a process of checking the number of new designs (S400), a process of obtaining an additional new design by a design generation model (S500), a process of filtering an additional new design and repeating the above process with the additional new designs as the reference data (S600), a process of evaluating a new design (S700), and a process of representing new designs in a low-dimensional space (S800).

As shown in FIG. 4, in the S100 process, the computing device 100 may obtain the first reference data for the product.

The computing device 100 may receive the first reference data through the communication interface 130 or obtain the first reference data stored in the storage 140.

The reference data may include a product's design which is engineered by an engineer and illustrated by a designer and which is validated aesthetically and in performance. Alternatively, the reference data may refer to a technical design including essential elements of a system, and may be copied by a third party. The third party may improve or modify the reference data as needed.

The reference data may include at least one of a pattern image unrelated to a product (e.g., Pattern Img), an image for a two-dimensional product (e.g., Wheel Img), a skeleton image for a two-dimensional product (e.g., 2D Skel. Img), a skeleton image for a three-dimensional product (e.g., 3D Skel. Img), a cross-section image for a three-dimensional product (e.g., Cross Img), a view image for a three-dimensional product (e.g., View Img), a black-and-white image for a product (e.g., Black Img), and a color image for a product (e.g., Color Img). The reference data may include a 2D reference data or a 3D reference data.

In this case, the 2D reference data may include at least one of shape image data, pattern data, skeleton data, graph data, SDF data (distance information), depth data, implicit function (function expression or deep learning model), Grammar, and multi-view data obtained from each type of data.

In addition, the 3D reference data may include at least one of CAD data, voxel data, mesh data, pointcloud data, Octree data, shape parameter data, pattern data, skeleton data, graph data, SDF data (distance information), and implicit function (function expression or deep learning model). The reference data can be referred to as seed data because it is used as a seed for generating a new design.

In the following specification, the terms of design or design options for a product may refer to data that can be expressed as input and output of the computing device 100. In addition, the design or design options for a product may be two-dimensional or three-dimensional design data, black and white or color design data, and any file format representing the design of a product, such as an image file, a CAD file, or a modeling file. Blueprint and design may have the same meaning.

FIG. 7 is a flowchart showing a process of obtaining a reference data in a generative design method based on reference data and implicit neural representation according to an exemplary embodiment of the present disclosure. FIGS. 8a and 8b show examples of reference data generated by preprocessing input data.

In the S210 process, the computing device 100 may receive input data through the communication interface 130 or obtain input data stored in the storage 140. The input data may include at least one of an image for a two-dimensional product, an image for a three-dimensional product, and a modeling for a three-dimensional product.

In the S220 process, the computing device 100 may preprocess the input data according to a preset preprocessing method. For example, the preset preprocessing method may include at least one of a method of extracting a pattern image from input data (S221, see (1) of FIG. 8a), a method of extracting a skeleton image (S222, see (2) of FIG. 8a), a method of extracting a view image (S223, see (3) of FIG. 8a), a method of extracting a cross-section image (S224, see (1) of FIG. 8b), and a method of extracting a black and white image from a color image (S225).

Herein, the view image for a three-dimensional product may refer to an image when the three-dimensional product is viewed from a specific direction (view). Furthermore, the computing device 100 may also provide information on a corresponding specific view while extracting the view image for the 3-dimensional product (e.g., [x,y,z]=[1,1,1]).

Herein, the cross-section image for the 3-dimensional product may refer to an image of a cross-section that the 3-dimensional product has at a depth based on a value inputted by a user while viewing the 3-dimensional product in a specific direction (view). Furthermore, the computing device 100 may provide information on a corresponding specific view along with information on the depth of the pixel while extracting the cross-section image for the 3-dimensional product (e.g., [x,y,z]=[0,0,1]).

In the S220 process, the computing device 100 may perform at least one or two or more of the S221 to S225 processes in parallel for the input data, and may perform two or more processes in a sequential combination, thereby obtaining a preprocessed image.

In the S230 process, the computing device 100 may provide a preprocessed image, and the preprocessed image may be used as the reference data. Herein, the preprocessed image may include at least one of a pattern image (e.g., Pattern Img), an image for a two-dimensional product (e.g., Wheel Img), a skeleton image for a two-dimensional product (e.g., 2D Skel. Img), a skeleton image for a three-dimensional product (e.g., 3D Skel. Img), a cross-section image for a three-dimensional product (e.g., Cross Img), a view image for a three-dimensional product (e.g., View Img), a black-and-white image for a product (e.g., Black Img), a color image for a product (e.g., Color Img), or may include a combination of two or more.

In the S200 process as shown in FIG. 4, the computing device 100 may obtain a new design by generative design. Specifically, the computing device 100 may generate a plurality of new designs by applying generative design on the basis of the reference data.

Generative design may use at least one of (i) a topology optimization methodology using at least one of a SIMP model, an ESO model, a BESO model, a LevelSet model, an MMC model, and a deep learning model, (ii) a size/shape optimization methodology, and (iii) a parametric design methodology.

In the S120 process, the computing device 100 may obtain a first new design by topology optimization (TO). Referring to FIGS. 5a to 5d, as an example, the computing device 100 may obtain one or more first new designs by applying topology optimization to the first reference data. As another example, the computing device 100 may obtain one or more first new designs by applying topology optimization to a second new design obtained in the S130 process to be described later.

Topology optimization may be defined as an optimization problem for a reference design that can satisfy the user's design requirement factors based on physics. Optimal design may be distinguished into shape optimization to optimize the shape or size of an object, material optimization to optimize the material, and topology optimization to optimize the structure of an object.

In the S130 process, the computing device 100 may obtain a second new design by parametric design (PD). Referring to FIGS. 5a to 5d, as an example, the computing device 100 may obtain one or more second new designs by applying a parametric design to the first reference data. As another example, the computing device 100 may obtain one or more second new designs by applying a parametric design to the first new design obtained in the S120 process described above.

Parametric design may perform parameterization for reference designs that can satisfy the user's design requirement factors on the basis of rules.

In various exemplary embodiments, the computing device 100 may obtain the second new design by performing the S130 process on the first new design obtained in the S200 process, may obtain the first new design by performing the S120 process on the second new design again, and may repeatedly perform the S120 process and the S130 process. Through this, the computing device 100 may obtain a plurality of first and second new designs. That is, even when the number of the first reference data obtained through the S100 process is small, it may be possible to obtain a relatively large number of the first new designs and second new designs through the S120 process and the S130 process.

In the S140 process, the computing device 100 may train a design generation model (DGM). As an example, the computing device 100 may train the design generation model (DGM) capable of generating a novel third new design by using at least one of the first reference data, the first new design, and the second new design.

Herein, the trained design generation model (DGM) may have a latent space (z) trained by at least one of the first reference data, the first new design, and the second new design. The latent space (z) may have a reduced dimension compared to the first reference data, the first new design, and the second new design, and may represent the first reference design, the first new design, and the second new design to be mapped onto the reduced dimension (low dimension).

The first new design generated by topology optimization and the second new design generated by the parametric design may not be integrated into a single model on the basis of physics (rules) because representing methods such as dimension and length are different. The design data of the first new design and the second new design, which have different representations, may be all used by extracting and mapping the feature of the first new design and the feature of the second new design on the latent space (z) having a low dimension by applying the first new design and the second new design to the design generation model (DGM).

In various exemplary embodiments, the design generation model (DGM) may be composed of an artificial intelligence model capable of generating a new design by using the latent space (z) while extracting and mapping design data to the latent space (z). The design generation model (DGM) may be composed of all generative models using deep learning, and as an example, the design generation model may be at least one of neural implicit representation models such as DeepSDF, DualSDF, and Deep Implicit Templates along with a GAN model such as Vanilla GAN, DCGAN, cGAN, WGAN, EBGAN, BEGAN, CycleGAN, DiscoGAN, StarGAN, SRGAN, SEGAN, SDF-based GAN, Shape GAN, and PolyGen model. However, the design generation model may be not limited to the GAN model and the neural implicit representation, and use all deep learning-based generative models capable of generating new design data.

In various exemplary embodiments, the computing device 100 may perform preprocessing on the design data of the first reference data, the first new design, and the second new design before training the design generation model. For example, the computing device 100 may preprocess the design data in a format such as mesh, signed distance function (SDF), etc., and then may train with a deep learning model appropriate for each preprocessing format. The preprocessing method of the design data may be applied by a voxel, a point cloud, or the like, but may not be limited thereto, and any method that can be borrowed by a general technician may be applied. Referring to FIGS. 5a to 5d, for example, the design generation model (DGM) may include a classifier for classifying true and false of an inputted design and a generator for generating a new design by using a vector mapped to the latent space (z). The classifier and the generator may be models that are trained by competing with each other to improve each other's performance.

The classifier may be trained to classify real data as true and to classify fake data as false, and the generator may be trained to generate fake data that cannot be distinguished from real data by the classifier. When the training of the classifier and the generator is completed, the generator can be trained with the probability distribution of the real data and generate fake data that follows the corresponding probability distribution, such that the classifier may be in a state in which the fake data generated by the generator may not be distinguished from the real data.

Referring to FIGS. 5a to 5d, the neural implicit representation method may optimize the mapped data (Z) of each data (X) in the latent space (z) through an auto-decoder methodology. In this case, the mapped data may be inputted in the same manner while combined with the corresponding coordinates, and the model may be trained with the distance value. When the training is completed, the corresponding implicit neural representation model may be trained with the three-dimensional shape in an implicit function manner, and output the corresponding three-dimensional shape when the appropriately mapped data is inserted.

High-dimensional data, such as the first reference data, the first new design, and the second new design, may be mapped to the latent space (z) of the generator having low dimensions. Thereafter, a novel third new design may be generated by using the feature of the first reference data, the feature of the first new design, and the feature of the second new design which are matched to the low dimensions.

In the S150 process, the computing device 100 may generate the novel third new design by using the latent space (z) of the trained design generation model (DGM). The feature of the first reference data, the feature of the first new design, and the feature of the second new design may be mapped to the latent space (z).

In various exemplary embodiments, the computing device 100 may generate the feature information of the novel third new design by applying an interpolation method to information on the feature of the first reference data, the feature of the first new design, and the feature of the second new design which are mapped to the latent space (z), and may generate a third new design by utilizing the design generation model (DGM) on the basis of the feature information of the third new design.

Herein, the feature information of the novel third new design may be determined by applying the selection of at least two or more average values, intermediate values, sums, differences, maximum values, minimum values, and arbitrary values between the maximum and minimum, among information on the feature of the first reference data, the feature of the first new design, and the feature of the second new design to the interpolation method.

A method of creating generative design resembling the reference data may be selected from the two ways to be used. The first may be a method of reflecting the reference data and the similarity to the objective function, and the second may be a method of reflecting the reference data and the similarity to the sensitivity function that differentiates the objective function.

First, the first method, reflecting the similarity on the objective function, will be introduced. The objective function of generative design may be composed of the sum of a performance objective function part (PERF) corresponding to factors satisfying a user's needs when designing and a similarity part (SIM) for determining the reference data and the similarity.

$$\min_{\mathbf{x}} f(\mathbf{x}) = PERF + \lambda SIM$$

The performance objective function part (PERF) may include factors such as the engineering performance of the product, the manufacturability of the product, and the aesthetics of the product as a matter of an optimization regarding product performance. That is, it may refer to requirement factors set by the user. The similarity objective function part (SIM) may include the similarity between the new design and the reference data as a matter of a similarity optimization regarding the reference data. The similarity objective function part may adjust the degree of influence on the entire objective function of generative design by the weight ($\lambda$).

The second method, reflecting the similarity on the sensitivity function, will be introduced. The sensitivity function may be composed of the sum of the part of differentiating the performance objective function part (PERF) corresponding to the factors satisfying the user when designing and the part of the similarity to the reference data.

$$\frac{df(\mathbf{x})}{d\mathbf{x}} = \frac{dPERF}{d\mathbf{x}} + \lambda SIM$$

The sensitivity function may represent the rate of change of the objective function, and this value may be repeatedly calculated to find the optimal design value. In this case, the new design (generated design) may be induced to resemble the reference data (reference design) by making the sensitivity the greater as the more similar to the reference data (reference design). At this time, the influence of the reference data (reference design) of generative design may be adjusted by the weight ($\lambda$).

In summary, the generative design of the present disclosure may generate a new design resembling the reference data by assigning the similarity (SIM) to the objective function or assigning the similarity (SIM) to the sensitivity function, and may adjust the degree of resemblance with the weight ($\lambda$). The present disclosure may include all generative design methods transforming an objective function or a sensitivity function in order to create generative design resembling the reference data.

Furthermore, referring to FIGS. 5a to 5d, the computing device 100 may perform an abnormal filtering process for excluding an abnormal design from the third new designs generated by the design generation model (DGM). In addition, the computing device 100 may perform a similarity filtering process for excluding similar designs from the third new designs. Herein, the computing device 100 may perform at least one of the abnormal filtering process and the similarity filtering process.

In addition, in various exemplary embodiments, the computing device 100 may apply at least one of the abnormal filtering process and the similarity filtering process to at least one of the first reference data, the first new design, the second new design, and the third new design.

The computing device 100 may perform an abnormal filtering process by using an abnormal filtering module (NAM). Herein, the abnormal filtering module (NAM) may be a binary classifier for classifying the incoming input design data as normal (1) or abnormal (0), or a multi-classifier for either classifying an abnormal degree of design data into a plurality of classes or representing probability.

The abnormal filtering model may be a supervised learning model or an unsupervised learning model. The supervised learning-based abnormal filtering model may be trained with training data of input designs labeled as normal or abnormal, and the unsupervised learning-based abnormal filtering model may extract the feature of the unlabeled input design and classify the input designs as normal or abnormal on the basis of the extracted feature.

The abnormal filtering model may be composed of a convolutional neural network (CNN) consisting of a feature extractor for extracting the feature by using an image of the input design and a classifier for classifying the extracted feature.

In the S160 process of FIG. 4, the computing device 100 may obtain at least one of the first new design, the second new design, and the third new design as the second reference data. Furthermore, the computing device 100 may perform subsequent processes including the S100 process by using the second reference data as the first reference data, and may generate a large number of the second reference data by using a relatively small number of first reference data through repeating a plurality of processes.

Referring to FIGS. 3a to 3d and 5a to 5d, in the S160 process of various exemplary embodiments, the computing device 100 may select a predetermined number of designs by sampling at least one of the first new design, the second new design, and the third new design. In various exemplary embodiments, the computing device 100 may determine the number of designs, which performs the S200 process to be described later, in consideration of the performance of the computing device 100 for design of experiment (DOE). Herein, the predetermined number of designs may refer to at least 1000 designs for deep learning. The computing device 100 may perform an optimal sampling through a sampling technique such as Latin Hypercube sampling (LHS), but may not be limited thereto.

Referring to FIGS. 3a to 3d and 5a to 5d, in the S160 process of various exemplary embodiments, the computing device 100 may perform a postprocessing process of changing the second reference data into three-dimensional design data when the second reference data is two-dimensional design data. The postprocessing method of changing the two-dimensional design data into three-dimensional design data may include 3D Mesh, B-rep, etc., and various methods that can be adopted by those skilled in the art may be applied.

The first reference data, the first new design, the second new design, the third new design, and the second reference data described above may be expressed in the singular, but may be intended to include the plural.

FIG. 6a may show various examples of new designs generated by using pattern images as reference data.

Referring to FIG. 6a, in the S200 process of various exemplary embodiments, the computing device 100 may generate a new design of a product similar to the pattern image through a similarity part while ensuring the engineering performance of the product by proceeding with generative design (e.g., topology optimization, size and shape optimization, parametric design) with the pattern image utilized as the reference data. That is, the computing device 100 may generate a new design for an aesthetically resembled product by using the pattern image as the reference data even when there is no reference data (e.g., an initial wheel image) for a product to be newly designed.

FIG. 6b may show various examples of the new design generated by using a skeleton image as the reference data.

Referring to FIG. 6b, in the S200 process of various exemplary embodiments, the computing device 100 may generate a new design by proceeding with generative design (e.g., topology optimization, size and shape optimization, parametric design) by using a skeleton image for a two-dimensional product (e.g., 2D Skel. Img.) or a skeleton image for a three-dimensional product (e.g., 3D Skel. Img.) as the reference data.

In various exemplary embodiments, when applying the topology optimization methodology for generative design, a skeleton image for a two-dimensional (three-dimensional) product can be used instead of a general image for the two-dimensional (three-dimensional) product such that the influence arising from the biased density (thickness, volume) in the general image for a two-dimensional (three-dimensional) product can be prevented from reaching the new design. In addition, the new design may not have a skewed distribution of density (thickness, volume) for the product by using the skeleton image for a two-dimensional (three-dimensional) product.

In various exemplary embodiments, the computing device 100 may generate a new design for a product having a uniformly increased density (thickness, volume) according to a volume ratio, which is a user-specified parameter.

For example, a new design with a large volume ratio may provide a design for a product with a relatively increased density (thickness, volume) than a new design with a small volume ratio.

FIG. 6c shows various examples of new designs generated by using a view image or a cross-section image as the reference data.

Referring to the two drawings on the upper side of FIG. 6c, the computing device 100 may generate a new design, which resembles a view image in a specific direction, from one of an image for a two-dimensional product, an image for a three-dimensional product, and a modeling for a three-dimensional product.

Herein, the computing device 100 may extract the view image (O1) in a specific direction from one of an image for a two-dimensional product, an image for a three-dimensional product, and modeling for a three-dimensional product by using a view extraction model. In addition, the computing device 100 may also extract information on a specific direction view. Herein, the information on the specific direction view may be a vector representing the direction from which the product is viewed (e.g., [x, y, z]=[1,1,1]).

Furthermore, the computing device 100 may generate a new design (N1) by applying topology optimization by using a view image (O1) of a specific direction as the reference data. In this case, the new design may be a design similar to the direction view identical to the specific direction view image.

Furthermore, the computing device 100 may extract a plurality of view images (O1, O2) for a plurality of view directions, and may generate a plurality of new designs (N1, N2) by applying generative design (e.g., topology optimization, size and shape optimization, parametric design) to the plurality of view images, respectively.

Herein, the plurality of new designs may be topologically optimized designs corresponding to each of the plurality of view images. In this case, the objective function of topology optimization may be formed in a plurality to have a similarity part corresponding to the plurality of view images, and it may be possible to obtain the plurality of new designs by finding an answer to each of the plurality of objective functions of topology optimization.

Furthermore, the computing device 100 may generate a new image for a two-dimensional product or a new modeling for a three-dimensional product by combining the plurality of new designs corresponding to the plurality of view directions by using information ([1,1,1], [1,0,1]) on the plurality of view directions.

In various exemplary embodiments, the computing device 100 may extract the plurality of view images (O1, O2) for the plurality of view directions, and may generate one new design by applying generative design (e.g., topology optimization, size and shape optimization, parametric design) to all of the plurality of view images together. In this case, the objective function of topology optimization may have a plurality of similarity parts corresponding to the plurality of view images formed in a plurality, and the new design may be obtained by finding an answer to the objective function of a single topology optimization in which the plurality of similarity parts (L1 distance terms) are present.

Meanwhile, referring to the lower drawing of FIG. 6c, the computing device 100 may generate a new design that resembles a cross-section image at a predetermined depth according to a user's input in a view of a specific direction in one of an image for a two-dimensional product, an image for a three-dimensional product, and a modeling for a three-dimensional product.

Herein, the computing device 100 may extract the cross-section image (O3) of the product in a specific direction and at a predetermined depth in one of an image for a two-dimensional product, an image for a three-dimensional product, and a modeling for a three-dimensional product by using a cross-section extraction model. Herein, the cross-section image for the product may refer to an image for a cross-section that the product has at a depth according to a value inputted by the user while viewing the two-dimensional or three-dimensional product from a specific direction (view).

In addition, the computing device 100 may extract information on a specific direction view and information on a depth together. Herein, the information on the specific direction view may be a vector representing a direction in which the product is viewed (e.g., [x, y, z]=[0,0,1]). The information on the depth may define the product part farthest from the user as 100% and define the product part closest to the user as 0% (e.g., depth = 50%) when assuming that the total depth of the product is 100% on the basis of the specific directional view.

Furthermore, the computing device 100 may generate a new design (N3) by applying generative design (e.g., topology optimization, size and shape optimization, parametric design) to a cross-section image (O3) of a specific direction and a predetermined depth as the reference data. In this case, the new design may be a design that has the direction view identical to and the predetermined depth similar to a cross-section image of a product at a specific direction and a predetermined depth.

Furthermore, the computing device 100 may extract a plurality of cross-section images (O3) for a specific direction and a plurality of depths, and may generate a plurality of new designs (N3) by applying generative design (e.g., topology optimization, size and shape optimization, parametric design) to each of the plurality of cross-section images.

Herein, the plurality of new designs may be a topologically optimized design corresponding to each of a plurality of cross-section images. In this case, the objective functions of topology optimization may formed in a plurality in order to correspond to the plurality of cross-section images, and a plurality of new designs may be obtained by finding an answer to each of the plurality of the objective functions of topology optimization.

Furthermore, the computing device 100 may generate a new image for a two-dimensional product or a new modeling for a three-dimensional product by combining a plurality of new designs corresponding to a plurality of depths by using information ([0, 0, 1]) on a specific direction and a plurality of depths.

In various exemplary embodiments, the computing device 100 may extract a plurality of cross-section images (O3) for a plurality of depth directions, and may generate one new design by applying topology optimization to all of the plurality of cross-section images together.

In this case, the objective function of topology optimization may enable the similarity part corresponding to the plurality of cross-section images to be formed in a plurality and may obtain the new design by finding the answer to one objective function of topology optimization where the plurality of similarity parts (L1 distance term) are present.

In various exemplary embodiments, the computing device 100 may generate a plurality of new designs by applying generative design (e.g., topology optimization, size and shape optimization, parametric design) by using the view cross-section image extracted from a plurality of direction views and a plurality of depths for the product as the reference data.

Referring to FIGS. 4 to 5d, in the S300 process, the computing device 100 may filter a plurality of new designs. Herein, the new design may be any one of the first reference data, the first new design, the second new design, the third new design, and the second reference data.

In the S300 process, the computing device 100 may perform at least one of a performance filtering process of a new design and a similarity filtering process.

In various exemplary embodiments, in the performance filtering process, the computing device 100 may evaluate the new design on the basis of requirement factors set by the user when designing, and may perform a process of excluding the new design that falls short of the requirement factors set by the user. In this case, a new design that does not pass the requirement factors may be referred to as a low-performance new design.

In various exemplary embodiments, in the similarity filtering process, the computing device 100 may perform filtering that excludes similar designs from a plurality of new designs.

In various exemplary embodiments, the computing device 100 may evaluate the similarity on a high-dimension domain in which the shape of the new design exists. The computing device 100 may perform an X space filtering process. Herein, the computing device 100 may measure the distance between two of the plurality of new designs in X space, and may exclude at least one of the two as similar designs when the distance between them is smaller than a preset first threshold value. This process may be performed for all of the plurality of new designs. Herein, the X space may refer to a high-dimension domain in which the shape of the new design exists by itself. That is, X space may refer to a new design itself generated by generative design.

In various exemplary embodiments, the computing device 100 may evaluate the similarity by mapping the shape of the new design onto the low-dimensional domain. The computing device 100 may perform a Z-space filtering process. Herein, the computing device 100 may extract the feature value of a low-dimension by projecting a plurality of new designs onto the latent space (z) by using an encoding model, measure a distance between the feature values of low-dimensions of two designs, and exclude at least one of the two as a similar design when the distance between them is smaller than a preset second threshold value. This process may be performed for all of the plurality of new designs. Herein, the Z space may refer to a space in which low-dimension values of the new design are mapped.

In the S300 process, the computing device 100 may perform one or both of the performance filtering process and the similarity filtering process. In addition, the computing device 100 may perform one or both of the X-space filtering process and the Z-space filtering process described above. However, the filtering process of the present disclosure may not be limited thereto, and various filtering methods capable of classifying similar designs may be applied.

Referring to FIGS. 4 to 5d, in the S400 process, the computing device 100 may check whether the number of filtered new designs exceeds a preset threshold value. Herein, the computing device 100 may perform the next S500 process when the number of filtered new designs does not exceed a preset threshold value, and may perform the next S700 process when exceeding a preset threshold value.

In the S500 process, the computing device 100 may generate an additional new design by applying a design generation model to the new design.

The computing device 100 may train a design generation model. As an example, the computing device 100 may train a design generation model capable of generating a novel additional new design by using at least one of the reference data and the new design.

Herein, the trained design generation model may have a latent space (z) trained by at least one of the reference data and the new design. The latent space (z) may have a reduced dimension compared to the reference data and the new design, and may be represented such that the reference design and the new design are mapped onto the reduced dimension (lower dimension).

In various exemplary embodiments, the design generation model may be composed of an artificial intelligence model capable of generating a new design by using the latent space (z) while extracting design data and mapping the same to the latent space (z).

The design generation model may be composed of any generative model using deep learning, and as an example, the generation model may be composed of at least one of Vanilla GAN, DCGAN, cGAN, WGAN, EBGAN, BEGAN, CycleGAN, DiscoGAN, StarGAN, SRGAN, SEGAN, SDF-based GAN, ShapeGAN, and PolyGen models. However, the design generation model may not be limited to the GAN model, and use any deep learning-based generative model that can generate or interpolate new design data. For example, the design generation model may include at least one of a deep learning model, a Boolean model, a morphing model, and an interpolation model.

The computing device 100 may generate a novel additional new design by using the latent space (z) of the trained generation model.

In the S600 process, the computing device 100 may perform filtering that excludes similar designs from additional new designs.

The filtering process described in the S300 process may be applied to the S600 process as it is. Furthermore, the computing device 100 may perform the S100 process of using an additional new design or a filtered additional new design as the reference data. Herein, the computing device 100 may perform a preprocessing process, such as extracting a pattern image or extracting a skeleton image by using an additional new design or a filtered additional new design.

The computing device 100 may repeat the S200 process of generating a new design by applying generative design by using the additional new design and the filtered additional new design.

In the S700 process, the computing device 100 may evaluate a new design.

Computing device 100 may determine whether the new design performance interpreting the new design satisfies preset requirements. The requirement may be information inputted by a user when generating a design or information preset for each product.

Herein, the new design performance may include at least one of a first interpretation result corresponding to the design requirement factors desired by the user, a second interpretation result corresponding to the physical performance of the product corresponding to the design, and a third interpretation result corresponding to the manufacturability, which is a factor to be considered when manufacturing a product corresponding to the design.

Correspondingly, the preset requirement factors may include at least one of a first requirement condition corresponding to a preset design requirement factor, a second requirement condition corresponding to a preset physical performance that a product should have at a minimum, and a third requirement condition corresponding to a preset manufacturability that is a minimum consideration factor when manufacturing the product.

In various exemplary embodiments, the computing device 100 may evaluate whether a requirement condition is satisfied by comparing at least one of the first to third interpretation result of the new design with one of the corresponding first to third requirement conditions.

The computing device 100 may repeatedly perform the S100 to the S600 process. Herein, the computing device 100 may repeatedly perform the S100 to the S600 process until the number of new designs filtered in the S400 process is greater than a preset third threshold value.

Referring to FIGS. 4 to 5d, in the S800 process, the computing device 100 may perform a process of representing a new design in a low-dimensional space.

Later, for convenience of explanation, a new design inputted to the implicit neural representation model may be called an input design (Xi), and outputted from the same may be called an output design (Xo).

In the S800 process, the computing device 100 may train an implicit neural representation model by using a plurality of new designs (Xi).

The implicit neural representation model may represent a plurality of new designs (Xi) on a continuous and parametric space (z) of a low dimension, and this may be referred to as a plurality of design mapping data (Z).

The computing device 100 may represent a plurality of new designs (Xi) as continuous values on the low-dimensional space (z) by using the implicit neural representation model.

The design mapping data (Z) may have information on the new design (Xi) which is represented on the low-dimensional space (z) corresponding one-to-one to the new design (Xi), and may be represented in a differentiable manner since having continuous values between the plurality of design mapping data (Z).

The computing device 100 may perform at least one of an exploration process for a new design, a design interpolation process, a design performance prediction process, a design optimization process, and an inverse design process of design by using a plurality of design mapping data (Z) in a continuous and parametric space (z) of low-dimension.

The computing device 100 may store design mapping data (Z), which is represented on a continuous low-dimensional space (z) and corresponds to the new design (Xi), in the storage 140 by using the implicit neural representation model.

The new design (Xi) may include all seed data such as topology optimization, size and shape optimization, parametric design, and user data included in generative design described above.

The computing device 100 may generate new design mapping data (Z') by processing the design mapping data (Z) in the latent space (z) after mapping all seed data to the latent space (z) of the low-dimension through deep learning for the implicit neural representation model.

The computing device 100 may generate an output design (Xo) distinguished from the conventional new design (Xi) by using the new design mapping data (Z') of the latent space (z), and the output design (Xo) may be referred to as synthesized data because it is newly synthesized data.

Hereinafter, a design exploration process, a design interpolation process (S15), a design performance prediction process (S20), a design optimization process (S30), and an inverse design process of design will be described with reference to FIG. 2.

In the S15 process, the computing device 100 may perform a design exploration process of exploring the first design mapping data ($Z_1$) among a plurality of design mapping data (Z) in the low-dimensional space (z) and obtaining the first design ($X_1$) corresponding to the first design mapping data (Z1).

The design mapping data (Z) represented in the low-dimensional space (z) may be represented by continuous numerical values, so exploration may be easier than that of the new design (X) represented by two- or three-dimension design data. Therefore, it may be possible to quickly find the first design ($X_1$) by exploring the first design mapping data ($Z_1$) corresponding to the first design ($X_1$) on the low-dimensional space (z) in order to find a specific first design ($X_1$).

After training the implicit neural representation model with a new design (X), the computing device 100 may search for a desired new design in real time by using the design mapping data (Z) represented in the latent space (z).

FIG. 6d may show an example of design interpolation in a latent space.

Referring to FIG. 6d, in the S15 process, the computing device 100 may perform a design interpolation process of interpolating a plurality of second design mapping data ($Z_1$) among a plurality of design mapping data (Z) in a low-dimensional space (z) and obtaining a second design (X2) corresponding to the interpolated second design mapping data ($Z_1$').

In various exemplary embodiments, the computing device 100 may perform a design interpolation process of selecting the number of N data among a plurality of design mapping data (Z) in the low-dimensional space (z), interpolating the same into the second design mapping data ($Z_2$) through an interpolation method, and obtaining the second design (X2) corresponding to the interpolated second design mapping data ($Z_2$).

In various exemplary embodiments, computing device 100 may generate the new design mapping data by applying an interpolation method (e.g., an intermediate value, an average value, or an average with other weights) to at least one design mapping data represented in the low-dimensional space (z). Because taking place in the low-dimensional space (z), this interpolation process may be performed with a simple computation.

In the conventional case, a plurality of new designs generated by generative design may not be represented in a continuous design space. Therefore, it may be not possible to generate design C located in the middle of design A and design B. However, an exemplary embodiment of the present disclosure may represent a new design by interpolating the design mapping data corresponding to all designs in a latent space (z) of low-dimension.

That is, after training the implicit neural representation model with a new design (X), the computing device 100 may generate a desired new design in real time by using the design mapping data (Z) represented in the latent space (z).

Hereinafter, a process S20 of predicting design performance in the artificial intelligence-based generative design method according to an exemplary embodiment of the present disclosure will be described.

FIG. 9 is a flowchart of a process of predicting design performance in an artificial intelligence-based generative design method according to an exemplary embodiment of the present disclosure. FIG. 10 is a conceptual block diagram of a process of predicting design performance according to an exemplary embodiment of the present disclosure.

In the S20 process, the computing device 100 may predict the performance of the design generated in the S10 process. The generated design may include the second reference data.

Referring to FIGS. 9 and 10, the S20 process may include at least one of a preprocessing process (S21) of the second reference data, a process (S22) of interpreting the second reference data, a process (S23) of training the design performance prediction model, a process (S24) of predicting the performance of the second reference data, a process (S25) of determining whether a predicted value of the design performance satisfies a criterion, a process (S26) of providing the trained design performance prediction model, and an adaptive sampling process (S27).

Referring to FIG. 10, in the S21 process, the computing device 100 may perform preprocessing on the second reference data, which is the design generated in the S10 process. Since a high computational cost for interpreting the design data by using the performance interpretation module is required, the computing device 100 may not be able to perform the interpretation on all of the second reference data. Therefore, the computing device 100 may perform preprocessing on the second reference data and then select a preset number of third reference data among the second reference data. In other words, the third reference data may refer to some of the preprocessed second reference data.

The number of the third reference data may be less than the number of the second reference data. For example, the computing device 100 may select as many the third reference data as the preset number from the second reference data through the preprocessing process. Herein, the preprocessing process may be applied in the same manner as the process of sampling as many designs as the preset number by applying a sampling technique to the plurality of designs in the description of FIGS. 4 to 5d.

However, the S21 process may not be necessarily a process that should be performed in the S20 process, and may be excluded as needed while the remaining processes are performed.

In the S22 process, the computing device 100 may interpret the third reference design by using the performance interpretation module. The performance interpretation module may provide a plurality of interpretation results by interpreting the third reference design.

Herein, the plurality of interpretation results may include at least one of a first interpretation result corresponding to the design requirement factors desired by the user, a second interpretation result corresponding to the physical performance of the product corresponding to the design, and a third interpretation result corresponding to the manufacturability, which is a factor to be considered when manufacturing a product corresponding to the design.

Examples of design requirement factors may include the length of a specific part of the product, the weight of the product, the volume of the product, and the like.

Examples of the physical performance of the product may include the stiffness of the structure, the intensity of the structure, the weight of the structure, and the like.

Examples of consideration factors when manufacturing a product may include injection molding possibility, extrusion molding possibility, manufacturing unit price, manufacturing period, and the like.

The interpretation result may be represented as an absolute number (e.g., 120, 45, etc.), a relative number (e.g., probability, percentage, etc.), a classification into a plurality of classes (e.g., upper/medium/lower, etc.), a binary classification (e.g., 0/1, etc.).

In the S220 of various exemplary embodiments, the computing device 100 may automatically label one of the second reference design and the third reference design with at least one of the plurality of interpretation results to store the same as interpretation data. As shown in the table below, the 2/3 reference design (X) may be matched with the first to third interpretation results (Y1, Y2, Y3) interpreted by the performance interpretation module to store as analysis data.

[Table 1]

| The 2/3 Reference Design (X) | First Interpretation Result (Y1) | Second Interpretation Result (Y2) | Third Interpretation Result (Y3) |
|---|---|---|---|
| Design 1 | 200 | 0.7 | Pass |
| Design 2 | 7 | 0.2 | Fail |
| ... | ... | ... | ... |

In the S23 process, the computing device 100 may train a design performance prediction model. In various exemplary embodiments, the computing device 100 may train the design performance prediction model by using interpretation data as training data.

The design performance prediction model may be trained by using the interpretation result labeled in the second or third reference design, and the trained design performance prediction model may output an interpretation result predicted by an input of the second or third reference design.

The design performance prediction model may include at least one of a first design performance prediction model trained with a first interpretation result labeled in the design, a second design performance prediction model trained with a second interpretation result labeled in the design, and a third design performance prediction model trained with a third interpretation result labeled in the design.

Herein, the trained first design performance prediction model may output design requirement factors desired by a user. In addition, the trained second design performance prediction model may output physical performance corresponding to the design. In addition, the trained third design performance prediction model may output manufacturability, which is a factor to be considered when manufacturing a product corresponding to a design.

The design performance prediction model may include a plurality of artificial intelligence models. The plurality of artificial intelligence models may include at least one of machine learning models such as a random forest model and a support vector machine (SVM), and deep learning models such as a convolutional neural network (CNN) family model and a recurrent neural network (RNN) family model, may be composed of one of an implicit neural representation family specialized in 3D deep learning, a transformer family, a PointNet family, a 3D CNN family, and a graph neural network (GNN), and may ensemble a plurality of models. In addition, all models may utilize both 2D and 3D data.

In the S24 process, the computing device 100 may predict the performance of the second or third reference data by using the trained design performance prediction model. Alternatively, the computing device 100 may obtain an interpretation result by inputting the second or third reference data to the trained design performance prediction model.

The trained design performance prediction model may output and provide at least one of a first interpretation result corresponding to a design requirement factor desired by a user, a second interpretation result corresponding to the physical performance of a product corresponding to the design, and a third interpretation result corresponding to manufacturability, which is a factor to be considered when manufacturing a product corresponding to the design.

In various exemplary embodiments, by inputting the third reference data, the computing device 100 may provide a first interpretation result by using the first design performance prediction model, provide a second interpretation result by using the second design performance prediction model, and provide a third interpretation result by using the third design performance prediction model.

In the S25 process, the computing device 100 may determine whether the obtained interpretation result satisfies a preset criterion value. For example, the computing device 100 may determine whether the first to third interpretation results satisfy a criterion compared to a preset criterion value corresponding to each. The preset criterion value may include a threshold design requirement corresponding to the first interpretation result, a threshold physical performance corresponding to the second interpretation result, and a threshold manufacturability corresponding to the third interpretation result.

In the S26 process, the computing device 100 may provide the trained design performance prediction model when the interpretation result of the second or third reference data satisfies a preset criterion value on the criterion of the S250 process. The computing device 100 may store the trained design performance prediction model in the storage 140.

In the S27 process, the computing device 100 may obtain the fourth reference data by applying adaptive sampling to the second or third reference data when the criteria in the S25 process are not satisfied. The adaptive sampling may be a technique that informs the location of data where the performance of the model is expected to be highest when design data is added.

In various exemplary embodiments, the computing device 100 may reduce the uncertainty by re-training the design performance prediction model by adding design data having high uncertainty (e.g., standard deviation of the interpretation result value) for the predicted value (an interpretation result) of the design performance prediction model.

In various exemplary embodiments, the computing device 100 may obtain additional interpretation results by performing additional interpretation on the fourth reference data and re-train the design performance prediction model on the basis of additional interpretation results.

In summary, when the predicted design performance does not satisfy a preset criterion value, the computing device 100 may cluster additional interpretation results for a newly generated design in the S10 process through adaptive sampling and re-train the design performance prediction model on the basis of the clustered additional interpretation results.

In the S20 process, the computing device 100 may perform a design prediction process of predicting the prediction performance data ($Y_3'$) through the third design mapping data ($Z_3$) for the third design ($X_3$) by using the performance prediction model trained with a plurality of design mapping data ($Z$) of a low-dimensional space ($z$) and the performance data ($Y$) of a plurality of designs ($X$) corresponding to the plurality of design mapping data ($Z$).

In other words, by training the performance prediction model with the design mapping data ($Z$) corresponding to the design ($X$) and the performance data ($Y$), the trained performance prediction model may output prediction performance data with specific design mapping data as input.

The computing device 100 may train the performance prediction model with a design ($X$) and performance data ($Y$) corresponding to each design as training data. In detail, the performance prediction model may be trained with the design mapping data ($Z$) of the design ($X$) and performance data ($Y$) represented on a low dimension by using the temporary neural representation model.

In this case, the trained performance prediction model may predict performance data (Y') for the new design (X) together with the implicit neural representation model. That is, the computing device 100 may predict the performance of the product of the new design by receiving the new design (X) as input by using the performance prediction model.

FIG. 11 is a flowchart of a process of obtaining an optimal design in an artificial intelligence-based generative design method according to an exemplary embodiment of the present disclosure. FIG. 12 is a conceptual block diagram showing a process of obtaining an optimal design according to an exemplary embodiment of the present disclosure. FIG. 13 is a view showing a conceptual diagram of a deep learning-based optimal design model according to an exemplary embodiment of the present disclosure.

In the S30 process, the computing device 100 may obtain an optimal design on the basis of the target performance desired by the user.

Referring to FIGS. 11 and 12, the process S30 may include at least one of a process (S31) of obtaining a first target performance, a process (S32) of obtaining a first optimal design option, and a process (S33) of obtaining a second optimal design option.

Referring to FIG. 12, in the S31 process, the computing device 100 may obtain a first target performance regarding performance information of a target product desired by the user.

Herein, the target performance may include at least one of a first target information corresponding to design requirement factors for a product desired by a user, a second target information corresponding to physical performance of the product, and a third target information corresponding to manufacturability, which is a factor to be considered when manufacturing a product. The first target information to third target information may correspond to the first interpretation result to third interpretation result, respectively.

In the S32 process, the computing device 100 may obtain a first optimal design option on the basis of the first target performance.

In various exemplary embodiments, the computing device 100 may train the inverse design model and the forward design model, so that a first optimal design option as an output is obtained by using the first target performance as an input of the inverse design model (IDM), and a second target performance identical to the first target performance train can be predicted as an output by using the first optimal design option as an input of the forward design model (FDM). In this process, the computing device 100 may obtain a first optimal design option for the first target performance in real time as an output of the inverse design model.

Herein, the forward design model may be composed of a design performance prediction model trained in the S20 process.

Here, since the inverse design model and the forward design model are used to generate the optimal design option for the target performance, both the inverse design model and the forward design model may be referred to as the optimal design model.

The computing device 100 may obtain an optimal design option for a target performance in real time for the purpose of globally optimizing the inverse design model. The computing device 100 may obtain a target performance for the optimal design option for the purpose of locally optimizing the forward design model.

Various optimization techniques may be used in the optimal design model, and for example, Gradient-based methods (e.g. backpropagation, SQP, etc.) and heuristic optimization methods (e.g. GA, etc.) may be used.

At least one of the inverse design model (IDM) and the forward design model (FDM) may include a plurality of deep learning models. The plurality of deep learning models may include at least one of a convolutional neural network (CNN) family model and a recurrent neural network (RNN) family model, or may include at least one of a PointNet family specialized in 3D deep learning, a 3D CNN family, and a Graph Neural Network (GNN). Alternatively, the plurality of models may be an ensemble. Also, all models may utilize both 2D and 3D data.

Herein, the optimal design model may be a model trained with a deep learning-based inverse design methodology. Deep learning-based inverse design methodology as a surrogate model may be a technology that outputs the optimal solution in real time when input values are given to the inverse network by training with a forward network and then re-training with an inverse network that predicts an optimal solution based on this. The deep learning-based inverse design method can show better performance than the traditional optimal design technique in higher dimensions of design problems. In addition, the deep learning-based inverse design method may selectively use supervised and unsupervised learning.

In various exemplary embodiments, the inverse design model may derive a first optimal design as output after receiving the first target performance as input, and the forward design model may receive the first optimal design option derived from the inverse design model as input and then may be trained to predict the second target performance identical to the first target performance, which is the input of the inverse design model.

In various exemplary embodiments, at least one of the forward design model and the inverse design model may be trained such that the second target performance, which is the output of the forward design model, is predicted by the first target performance, which is the input of the inverse design model, and the computing device 100 may obtain a design option outputted in real time as a first optimal design option from the inverse design model trained on the basis of the first target performance.

In the S33 process, the computing device 100 may sample the second optimal design option from the first optimal design option.

In various exemplary embodiments, the computing device 100 may obtain the second optimal design option by re-training the forward design model through the collection of additional interpretation results through adaptive sampling considering the first optimal design option and the uncertainty of the performance prediction thereof.

Herein, the uncertainty-conscious adaptive sampling may refer to quantifying the uncertainty of the first optimal design option predicted by the inverse design model through an uncertainty quantification model, and additionally sampling the first optimal design option where the target performance of the first optimal design option is higher than a preset performance and at the same time the quantified uncertainty is higher than a preset value. Herein, the uncertainty quantification model may include at least one of a Bayesian neural network, an Ensemble-based model (Deep Ensemble, etc.), and a Gaussian process.

In various exemplary embodiments, computing device 100 may obtain an additionally sampled design in the first optimal design option by applying the uncertainty-conscious adaptive sampling to the first optimal design option. The additionally sampled design option may be referred to as a 1-1 optimal design option.

In various exemplary embodiments, the computing device 100 may proceed with an interpretation on the additionally sampled design option and re-train the design performance prediction model of the S20 process on the basis of the interpretation data labeled by the interpretation result.

In various exemplary embodiments, the computing device 100 may derive a second optimal design option in a performance area improved more than the overall performance area of the existing first optimal design option by re-performing the optimal design for the first target performance by utilizing the re-trained design prediction model.

In various exemplary embodiments, the computing device 100 may generate a new design by using the first optimal design option or the second optimal design option as the first reference data of the S10 process.

In the S30 process, the computing device 100 may perform a design optimization process of optimizing a fourth design mapping data ($Z_4$) corresponding to the fourth design ($X_4$) within a low-dimensional space ($z$) on the basis of performance data ($Y$) of the plurality of designs ($X$), and obtaining the optimized fourth design data ($X_4'$).

When performance data of a specific design satisfies the requirement factors desired by the user, the computing device 100 may obtain the design mapping data corresponding to the corresponding design, optimize the fourth design mapping data ($Z_4$) on the basis of the corresponding design mapping data, and obtain the optimized fourth design ($X_4'$), thereby obtaining the fourth design ($X_4'$) optimized to have the requirement factors desired by the user.

In various exemplary embodiments, the computing device 100 may perform topology optimization for a plurality of design mapping data in a low-dimensional space ($z$).

For 3D shape optimization, conventional automatic parameterization optimal design techniques may require designers to perform parameterization on the basis of a base design and to define design variables to be optimized. For this reason, it may be possible to find the optimal design only within a limited design space. However, the exemplary embodiment of the present disclosure can perform an optimal design in the original design space because the 3D shape is automatically parameterized in the latent space.

In the S30 process, the computing device 100 may perform an inverse design process of obtaining the fifth design mapping data ($Z_5$) corresponding to the fifth performance data ($Y_5$) and then obtaining the fifth design ($X_5$) corresponding to the fifth design mapping data ($Z_5$) by using the inverse design model trained with performance data ($Y$) of a low-dimensional space ($z$) and a plurality of design mapping data ($Z$) corresponding to the performance data ($Y$).

Herein, when inputting performance data ($Y$) for requirement factors desired by the user, the inverse design model may output a design ($X$) that satisfies the requirement factors. The computing device 100 may output a design for a specific product that satisfies the inputted performance specification by receiving the desired performance specification as input for a specific product. That is, the user may inverse-design the design of the product when the user knows only the performance data of the product.

FIG. 14 is a conceptual block diagram for a process of evaluating an optimal design option, accumulating design data, analyzing design data, and recommending design data according to an exemplary embodiment of the present disclosure.

Referring back to FIGS. 2 and 14, in the S40 process, the computing device 100 may evaluate an optimal design option. The optimal design option may include a first optimal design option and a second optimal design option of the S30 process. In various exemplary embodiments, the computing device 100 may determine whether the optimal design option performance interpreting the optimal design option satisfies a preset requirement condition.

Herein, the optimal design option performance may include at least one of the first interpretation result corresponding to the design requirement factors desired by the user, the second interpretation result corresponding to the physical performance of the product corresponding to the design, and the third interpretation result corresponding to the manufacturability, which is a factor to be considered when manufacturing a product corresponding to the design.

Correspondingly, the preset requirement condition may include at least one of a first requirement condition corresponding to a preset design requirement factors, a second requirement condition corresponding to a preset physical performance that the product should have at a minimum, and a third requirement condition corresponding to a preset manufacturability as a minimum consideration when manufacturing the product.

In various exemplary embodiments, the computing device 100 may evaluate whether a requirement condition is satisfied by comparing at least one of the first to third interpretation results of the optimal design option with one of the corresponding first to third requirement condition.

In the S50 process, the computing device 100 may accumulate design data that satisfies a preset requirement condition among the optimal design options. In various exemplary embodiments, the computing device 100 may repeatedly perform the S10 process to the S30 process until the accumulated design data satisfies a preset number. The preset number may be 50,000 to 150,000 and preferably be approximately 100,000.

In the S60 process, the computing device 100 may analyze a plurality of accumulated design data.

In the S60 process of various exemplary embodiments, the computing device 100 may classify design data for the feature of a plurality of design data by using a clustering model. The computing device 100 may select a representative design representing the corresponding cluster among the plurality of design data classified into the plurality of clusters.

In the S60 process, in various exemplary embodiments, the computing device 100 may perform an abnormal filtering process for excluding abnormal design data from the accumulated design data. In addition, the computing device 100 may perform a similarity filtering process for removing duplicate design data from the accumulated design data. The abnormal filtering process may be applied in the same manner as the abnormal filtering process in the S100 process described above.

In the S60 process, in various exemplary embodiments, the computing device 100 may visualize the corresponding design data by using optimal design option performance and the feature of the design data.

FIG. 15 is a conceptual block diagram for a method of clustering preference information on design data and predicting a preference design by using a trained preference prediction model according to an exemplary embodiment of the present disclosure.

Referring to FIG. 15, in the S60 process of various exemplary embodiments, the computing device 100 may predict a user preference for design data by using a preference prediction model. In addition, the computing device 100 may recommend the design data to the user on the basis of the user preference of the predicted design data.

Referring to the upper view of FIG. 15, in various exemplary embodiments, the computing device 100 may perform a process of clustering training data for training a preference prediction model. Herein, the computing device 100 may perform a process of obtaining a user preference for the design data itself from the user through a question-and-answer process with the user. Various methods such as rank, relative evaluation, and rating may be used as a user evaluation method for obtaining a user preference.

In various exemplary embodiments, the computing device 100 may perform a process of obtaining a user preference for the transformed design data after changing at least one of dimensions (2D->3D, 3D->2D), colors (black and white->color), and materials (e.g., metal materials) in order to obtain a user's accurate preference for design data applied to the product. Herein, the user preference may include information on a style for the design, a price for the design, and the like.

Referring to the lower view in FIG. 15, in various exemplary embodiments, the computing device 100 may train a preference prediction model by using the user preference information (preference data) for the design data. In various exemplary embodiments, the computing device 100 may predict a user preference design preferred by a user among the plurality of design data by using the trained preference prediction model. As an example, the preference prediction model may be trained with the preference (y) labeled in the design (x) as training data, and the trained preference prediction model may output a prediction preference (y) for a new design (x).

In various exemplary embodiments, the computing device 100 may train a preference prediction model by using the user preference evaluation for at least one of all designs or design options described above, and obtain the user prediction preference for a design predicted by the trained preference prediction model.

FIG. 13 is a view showing a conceptual diagram of a deep learning-based optimal design model according to an exemplary embodiment of the present disclosure.

Referring to FIG. 13, the computing device 100 may obtain an optimal design option (x) on the basis of the target performance (y) of the product and the user preference (c) for the design by using the optimal design model.

In various exemplary embodiments, the inverse design model of the optimal design model may derive the first optimal design option (x) as output after receiving the first target performance (y) and the user preference (c) as input and then, the forward design model of the optimal design model may be trained to predict, as it is, a second target performance (y1, y2, ..., yn) identical to the first target performance (y), which is an input of the inverse design model, after receiving the first optimal design option (x) derived from the inverse design model as input.

In various exemplary embodiments, the computing device 100 may obtain an optimal design option by inputting the user prediction preference for the design predicted in the preference prediction model and the target performance into the optimal design model. That is, the optimal design model may provide an optimal design option with high user preference by reflecting the output value of the preference prediction model as an input to the optimal design model.

In addition, in various exemplary embodiments, the computing device 100 may obtain the user preference design performance for the user preference design predicted by using a design performance prediction model or a performance interpretation module. Herein, the user preference design performance may include at least one of a first interpretation result related to user design requirement factors, a second interpretation result corresponding to the physical performance of the product, and a third interpretation result corresponding to manufacturability, which is a factor to be considered when manufacturing a product corresponding to the design.

In various exemplary embodiments, the computing device 100 may propose the user preference design performance to the user as the first target performance of the product in the S30 process. Accordingly, in the S30 process, the computing device 100 may not only satisfy engineering performance, but may also provide a first optimal design option having an aesthetics that the user prefers.

In the S70 process, the computing device 100 may propose a user recommendation design among the design data. In various exemplary embodiments, the computing device 100 may propose the user recommendation design selected from the optimal design options by using a design recommendation model. The user may derive a design option for manufacturing through detailed design by using a concept plan having the engineering performance and aesthetics from the user recommendation design.

All of the models described above may refer to an artificial intelligence model. Herein, the artificial intelligence model may be composed of one or more network functions, and one or more network functions may be composed of a set of interconnected calculation units that may be generally referred to as "nodes". These "nodes" may be referred to as "neurons". One or more network functions may be configured to include at least one or more nodes. Nodes (or neurons) constituting one or more network functions may be interconnected by one or more "links".

In the artificial intelligence model, one or more nodes connected through a link may form a relationship of input nodes and output nodes relative to each other. The concept of an input node and an output node may be relative, and any node in an output node relationship with respect to one node may be in an input node relationship with another node, and vice versa. As described above, the input node-to-output node relationship may be generated around the link. One or more output nodes may be connected to one input node through a link, and vice versa.

In a relationship between an input node and an output node connected through one link, the output node may have its value determined on the basis of data inputted to the input node. Herein, a node interconnecting the input node and the output node may have a weight. The weight may be variable and may be varied by a user or an algorithm in order for the artificial intelligence model to perform a desired function. For example, when one or more input nodes are interconnected to one output node by respective links, the output node may determine an output node value on the basis of values inputted to input nodes connected to the output node and a weight set to a link corresponding to each of the input nodes.

As described above, the artificial intelligence model may enable one or more nodes to be interconnected through one or more links and may form input node and output node relationships within the artificial intelligence model. The feature of the artificial intelligence model may be determined according to the number of nodes and links, the associative relationship between the nodes and the links, and the weight value assigned to each of the links in the artificial intelligence model. For example, when there are two artificial intelligence models where the same number of nodes and links exist and weight values between the links are different, the two artificial intelligence models may be recognized as different from each other.

Some of the nodes constituting the artificial intelligence model may constitute one layer on the basis of distances from the initial input node. For example, a set of nodes with a distance of n from the initial input node may constitute an n layer. The distance from the initial input node may be defined by the minimum number of links that should be traversed to reach the corresponding node from the initial input node. However, the definition of such a layer may be arbitrary for explanation, and the order of the layer in the artificial intelligence model may be defined in a different way than described above. For example, the layer of nodes may be defined by the distance from the final output node.

The initial input node may refer to one or more nodes in which data is directly inputted without passing through a link in a relationship with other nodes among nodes in the artificial intelligence model. Alternatively, it may refer to a node that does not have any other input nodes linked to it in a relationship between nodes based on links in the artificial intelligence model network. Similarly, the final output node may refer to one or more nodes that do not have an output node in a relationship with other nodes among nodes in the artificial intelligence model. In addition, a hidden node may refer to nodes constituting the artificial intelligence model other than the first input node and the final output node. The artificial intelligence model according to an exemplary embodiment of the present disclosure may be an artificial intelligence model in which the number of nodes in an input layer is greater than that in a hidden layer closer to an output layer, and the number of nodes decreases when progressing from the input layer to the hidden layer.

The artificial intelligence model may include one or more hidden layers. The hidden node of the hidden layer may take as input the output of the previous layer and the output of the surrounding hidden nodes. The number of hidden nodes in each hidden layer may be the same or different. The number of nodes of the input layer may be determined on the basis of the number of data fields of the input data, and may be the same as or different from the number of hidden nodes. The input data inputted to the input layer may be calculated by a hidden node of the hidden layer and may be outputted by a fully connected layer (FCL), which is an output layer.

The computing device 100 may train an artificial intelligence model by using the training data. The computing device 100 may perform training on one or more network functions constituting the artificial intelligence model by using the training data set.

In an exemplary embodiment, the computing device 100 may input each of the training input data sets to one or more network functions, extract output data values calculated by one or more network functions as feature values, and train an artificial intelligence model on the basis of the extracted feature values.

In another exemplary embodiment, the computing device 100 may input each of the training input data sets to one or more network functions and may derive an error by comparing each output data calculated by one or more network functions with each of the training output data sets corresponding to each label of the training input data sets.

In the training of the artificial intelligence model, the training input data may be inputted to an input layer of one or more network functions, and the training output data may be compared with the outputs of one or more network functions. The computing device 100 may train the artificial intelligence model on the basis of an error between the computational results of one or more network functions on the training input data and the training output data (label).

In addition, the computing device 100 may be capable of adjusting the weight of one or more network functions on the basis of the error in a backpropagation method. That is, the computing device 100 may adjust the weight on the basis of the error between the computational results of one or more network functions on the training input data and the training output data, such that the output of one or more network functions approaches closely the training output data.

The computing device 100 may determine whether to stop training by using the validation data when training of one or more network functions is performed more than a predetermined epoch. The predetermined epoch may be part of the entire training target epoch. The validation data may be composed of at least a part of the labeled training data sets. That is, the computing device 100 may perform training of the artificial intelligence model through the training data set, and may determine whether the training effect of the artificial intelligence model is greater than or equal to a predetermined level by using the validation data after the training of the artificial intelligence model is repeated for at least a predetermined number of epochs or more. For example, in case the training where the target iteration training number is 10 times is performed by using 100 training data, the computing device 100 may perform 3 times of iteration training by using the number of 10 validation data after performing 10 times of iteration training, which is a predetermined epoch, and may determine that further training is pointless and stop the training when the change in the output of the artificial intelligence model during the 3 times of iteration training is below a predetermined level. That is, the validation data may be used to determine the completion of the training on the basis of whether the effect of the training for each epoch is greater than or equal to a certain level in the iteration training of the artificial intelligence model. The training data, the number of validation data, and the number of iterations described above may be examples only and may not be limited thereto.

The computing device 100 may generate an artificial intelligence model by testing the performance of one or more network functions with the test data set and by determining whether to activate one or more network functions. The test data may be used to validate the performance of the artificial intelligence model, and may be composed of at least some of the training data sets. For example, 70% of the training data set may be utilized for training the artificial intelligence model (i.e., training for adjusting the weight in order to output a result value similar to a label), and 30% may be utilized as the test data to validate the performance of the artificial intelligence model.

The computing device 100 may determine whether to activate the artificial intelligence model depending on whether to be greater than or equal to a predetermined performance by inputting the test data set to the artificial intelligence model where the training is completed and by measuring an error. The computing device 100 may validate the performance of the artificial intelligence model where the training is completed by applying the test data to the artificial intelligence model where the training is completed, and may activate the corresponding artificial intelligence model to be used in other applications when the performance of the artificial intelligence model where the training is completed is greater than or equal to a predetermined criterion.

In addition, the artificial intelligence model may be trained with at least one method of supervised learning, unsupervised learning, and semi-supervised learning. The training of an artificial intelligence model may be intended to minimize the error of the output. The training of the artificial intelligence model may be a process of updating the weight of each node of the artificial intelligence model by repeatedly inputting training data to the artificial intelligence model, calculating the error of the output and the target of the artificial intelligence model for the training data, and backpropagating the error of the artificial intelligence model in a direction from the output layer of the artificial intelligence model to the input layer in the direction of reducing errors.

In the case of supervised learning, training data in which the correct answer is labeled on each training data may be used (i.e., labeled training data), and in the case of unsupervised learning, the correct answer may not be labeled on each training data. That is, for example, the training data in the case of supervised learning about data classification may be data where each training data is labeled with a category. The training data may be input to the artificial intelligence model, and an error may be calculated by comparing the output (category) of the artificial intelligence model with the labels of the training data.

As another example, in the case of unsupervised learning about data classification, an error may be calculated by comparing the training data, which is an input, with the output of the artificial intelligence model. The calculated error may be backpropagated in the inverse direction (i.e., in a direction from the output layer to the input layer) in the artificial intelligence model, and a connection weight of each node in each layer of the artificial intelligence model may be updated according to backpropagation.

The amount of change in the connection weight of each updated node can be determined according to the learning rate. Calculation of the artificial intelligence model for the input data and backpropagation of the errors may constitute a learning cycle (epoch). The learning rate may be applied differently depending on the number of iterations of the learning cycle of the artificial intelligence model. For example, a high learning rate may be used in the early stages of an artificial intelligence model's training to increase efficiency so that the artificial intelligence model quickly secures a certain level of performance, and a low learning rate may be used in the later stages of training to increase accuracy.

In the training of an artificial intelligence model, the training data may be generally a subset of real data (i.e., data to be processed by using the trained artificial intelligence model), and as such, there may be a training cycle where the error on the training data decreases but the error on the real data increases. Overfitting may be a phenomenon where errors in the real data increase by being excessively trained with the training data. Overfitting may act as a cause of increasing errors in machine learning algorithms. Various optimization methods may be used to prevent such overfitting. Methods such as increasing training data, regularization, or dropout of omitting some nodes of the network in the training process may be applied in order to prevent overfitting.

In various exemplary embodiments, the artificial intelligence model may include a plurality of artificial intelligence models. The plurality of artificial intelligence models may include at least one of machine learning models such as a random forest model and a support vector machine (SVM), and deep learning models such as a convolutional neural network (CNN) family model and a recurrent neural network (RNN) family model, and may be composed of an implicit neural representation family specialized in 3D deep learning, a transformer family, a PointNet family, a 3D CNN family, and a graph neural network (GNN), and may ensemble a plurality of models. In addition, all models may utilize both 2D and 3D data.

Although the present disclosure has been described with reference to the exemplary embodiments shown in the drawings, these are merely exemplary, and those skilled in the art will understand that various modifications and other equivalent exemplary embodiments are possible therefrom. Therefore, the true scope of technical protection of the present disclosure should be determined by the technical idea of the appended claims.

[Description of Reference Numerals]

100: Computing Device.

**Claims**

1. An artificial intelligence-based generative design method performed by a computing device, the method comprising:

   a process of generating a new design for a product;
   a process of exploring the generated new design;
   a process of predicting performance of the new design; and
   a process of obtaining an optimal design among the new designs.

2. The method of claim 1, wherein the process of generating the new design for the product comprises:

   a process of obtaining a first new design by applying topology optimization to a first reference data;
   a process of obtaining a second new design by applying a parametric design to the first reference data;
   a process of additionally obtaining the second new design by applying the parametric design to the first new design; and
   a process of additionally obtaining the first new design by applying topology optimization to the second new design.

3. The method of claim 1, wherein the process of generating the new design for the product comprises:

   a process of mapping the first new design and the second new design to one latent space by using a design generation model;

and a process of using a third new design generated by the design generation model as a second reference data, wherein the first new design and the second new design can have a representation method and format different from each other.

4. The method of claim 1, wherein the process of predicting performance of the new design comprises:

a process of interpreting the new design by using a performance interpretation module;
a process of training a design performance prediction model on the basis of an interpretation result of the new design;
a process of predicting performance of the new design on the basis of the design performance prediction model;
a process of providing the trained design performance prediction model when the predicted design performance satisfies a preset criterion value; and
a process of re-training the design performance prediction model on the basis of the clustered additional interpretation result after clustering an additional interpretation result for the new design through an adaptive sampling when the predicted design performance does not satisfy the preset criterion value.

5. The method of claim 4, wherein the process of obtaining the optimal design among the new designs comprises:

a process of obtaining a first target performance about performance information of a target product desired by a user;
a process of obtaining a first optimal design option by inputting the first target performance to an inverse design model and training to predict a second target performance identical to the first target performance by inputting the first optimal design option to a forward design model; and
a process of obtaining a second optimal design option by re-training the design performance prediction model through an additional interpretation result of an additionally sampled design option selected by an adaptive sampling considering an uncertainty of the first optimal design.

6. The method of claim 1, further comprising:

a process of evaluating the optimal design;
a process of accumulating some of the optimal design as design data;
a process of analyzing the design data; and
a process of recommending the design data.

7. The method of claim 5, wherein the process of obtaining the first optimal design option by inputting the first target performance to the inverse design model and training to predict the second target performance identical to the first target performance by inputting the first optimal design option to the forward design model comprises a process of obtaining the first optimal design option by additionally inputting a user prediction preference for the design predicted in a user preference model along with the first target performance to the inverse design model.

8. An artificial intelligence-based generative design method performed by a computing device, the method comprising:
a process of obtaining a plurality of new designs that have a similarity to the reference data by applying generative design to a reference data.

9. The method of claim 8, wherein generative design uses at least one of (i) a topology optimization methodology using at least one of SIMP, ESO, BESO, LevelSet, MMC, and deep learning, (ii) a size and shape optimization methodology, and (iii) a parametric design methodology.

10. The method of claim 8, wherein (i) an objective function of generative design is composed of a performance function part corresponding to a requirement factor inputted by a user and a similarity function part for determining a similarity to the reference data or
(ii) a sensitivity function of generative design is composed of part of differentiating a performance function corresponding to the requirement factor inputted by the user and the similarity function part for determining the similarity to the reference data.

11. The method of claim 8, comprising:

a process of obtaining a plurality of design mapping data by training an implicit neural representation model using the plurality of new designs and by mapping the plurality of new designs into a low-dimensional, continuous, and parametric space (z); and

at least one of a design exploration process, a design interpolation process, a design performance prediction process, a design optimization process, and an inverse design process of design by using the plurality of design mapping data in the low-dimensional, continuous, and parametric space (z).

12. The method of claim 11, wherein the design optimization process performs topology optimization by applying a topology optimization technique for the plurality of design mapping data in the low-dimensional continuous and parametric space (z).

13. An artificial intelligence-based generative design method performed by a computing device, the method comprising:

a process of obtaining a plurality of design mapping data (Z) by mapping a plurality of designs (X) for a product into a low-dimensional latent space (z) by using an implicit neural representation model; and

at least one of a design exploration process, a design interpolation process, a design performance prediction process, a design optimization process, and an inverse design process of design by using the plurality of design mapping data in the latent space (z).

14. The method of claim 13, wherein the design exploration process explores a first design mapping data (Z1) among the plurality of design mapping data (Z) in the latent space (z) and obtains a first design (X1) corresponding to the first design mapping data (Z1).

15. The method of claim 13, wherein the design interpolation process selects the number of N data from the plurality of design mapping data (Z) in the latent space (z), interpolates into a second design mapping data (Z2) through an interpolation method, and obtains a second design (X2) corresponding to the interpolated second design mapping data (Z2).

16. The method of claim 13, wherein the design prediction process predicts prediction performance data (Y3') through a third design mapping data (Z3) for a third design (X3) by using a performance prediction model trained with the plurality of design mapping data (Z) of the latent space (z) and the performance data (Y) of the plurality of designs (X) corresponding to the plurality of design mapping data (Z).

17. The method of claim 13, wherein the design optimization process optimizes a fourth design mapping data (Z4) corresponding to a fourth design (X4) within the latent space (z) and obtains an optimized fourth design (X4') on the basis of the performance data (Y) of the plurality of designs (X).

18. The method of claim 13, wherein the inverse design process obtains a fifth design mapping data ($Z_5$) corresponding to a fifth performance data ($Y_5$) and obtains a fifth design data ($X_5$) corresponding to the fifth design mapping data ($Z_5$) by using the inverse design model trained with the performance data (Y) of the latent space (z) and the plurality of design mapping data (Z) corresponding to the performance data (Y).

Fig. 1

100

110 — processor (controller)

120 — memory
141 — computer program

130 — communication interface

140 — storage
141 — computer program

BUS

Fig. 2

```
              ( start )
                 │
                 ▼                    S10
      ┌─────────────────────────┐
      │   generation of design  │◄───┐
      └─────────────────────────┘    │
                 │                    │
                 ▼                    S15
      ┌─────────────────────────┐    │
      │ exploration of design   │    │
      │     (interpolation)     │    │
      └─────────────────────────┘    │
                 │                    │
                 ▼                    S20
      ┌─────────────────────────┐    │
      │ prediction of design    │    │
      │      performance        │    │
      └─────────────────────────┘    │
                 │                    │
                 ▼                    S30
      ┌─────────────────────────┐    │
      │ acquisition of optimal  │    │
      │      design option      │    │
      └─────────────────────────┘    │
                 │                    │
                 ▼                    S40
      ┌─────────────────────────┐    │
      │ evaluation of optimal   │────┘
      │      design option      │
      └─────────────────────────┘
                 │                    S50
                 ▼
      ┌─────────────────────────┐
      │ accumulation of design  │
      │          data           │
      └─────────────────────────┘
                 │                    S60
                 ▼
      ┌─────────────────────────┐
      │  analysis of design     │
      │          data           │
      └─────────────────────────┘
                 │                    S70
                 ▼
      ┌─────────────────────────┐
      │ recommendation of       │
      │     design data         │
      └─────────────────────────┘
                 │
                 ▼
              (  end  )
```

Fig. 3A

Fig. 3B

adaptive
sampling

deep learning-based
design prediction AI

automatic collection of
interpretation data

design performance prediction

3D deep learning

(Mesh/Voxel/
Point cloud/SDF based)

① design
  requirement

② performance

③ manufacturability
⋮

generation
design

① design
  requirement

② performance

③ manufacturability
⋮

interpretation
result

prediction model

design updates

b

c

Fig. 3C

deep learning-based optimal design AI

Fig. 3D

Fig. 4

```
                        ( start )
                            │
                            ▼                    ┌ S100
          ┌──────────────────────────────────┐
          │   obtaining first reference data   │
          └──────────────────────────────────┘
                            │                    ┌ S200
          ┌─────────────────────────────────────────┐
          │  ┌────────────────────────────────────┐ │
          │  │       obtaining new design          │ │
          │  │      by generative design           │ │
          │  │                          ┌ S120     │ │
          │  │  ┌──────────────────────────────┐  │ │
          │  │  │   obtaining first new design   │  │ │
          │  │  │    by topology optimization    │  │ │
          │  │  └──────────────────────────────┘  │ │
          │  │                          ┌ S130     │ │
          │  │  ┌──────────────────────────────┐  │ │
          │  │  │  obtaining second new design   │  │ │
          │  │  │     by parametric design       │  │ │
          │  │  └──────────────────────────────┘  │ │
          │  └────────────────────────────────────┘ │
          │                   │           ┌ S140     │
          │  ┌────────────────────────────────────┐ │
          │  │     training design generation model │◄┤
          │  └────────────────────────────────────┘ │
          │                   │           ┌ S150     │
          │  ┌────────────────────────────────────┐ │
          │  │        obtaining third new design    │ │
          │  └────────────────────────────────────┘ │
          │                   │           ┌ S160     │
          │  ┌────────────────────────────────────┐ │
          │  │     obtaining second reference data  │ │
          │  └────────────────────────────────────┘ │
          └─────────────────────────────────────────┘
                            │                    ┌ S300
          ┌──────────────────────────────────┐
          │          filtering new designs     │
          └──────────────────────────────────┘
                            │
                            ▼         ┌ S400
                     ◇ number of ◇        YES
                     ◇ new designs > threshold ◇ ──────────┐
                     ◇    value    ◇                        │
                            │ NO                            │
                            ▼         ┌ S500                ▼         ┌ S700
          ┌──────────────────────────────────┐   ┌──────────────────────────────────┐
          │   obtaining additional new design  │   │       evaluating new design        │
          │       by generation model          │   └──────────────────────────────────┘
          └──────────────────────────────────┘                │         ┌ S800
                            │         ┌ S600     ┌──────────────────────────────────┐
          ┌──────────────────────────────────┐   │     representing new designs       │
          │     filtering additional new design │   │     in low-dimensional space       │
          └──────────────────────────────────┘   └──────────────────────────────────┘
                            │                                │
                          ( end )                          ( end )
```

Fig. 5A

**Data Generation**

Reference Data — X

Filtering

Generative Design — Y

Generate New Designs by Generative Models, Boolean, Morphing, Interpolation, etc.

Filtering — Z

% of new designs ≤ ε ?
NO / YES

primary generation data

**Implicit Neural Representation-based generation model training**

Implicit Neural Representation (2D/3D Parameterization)

Data
Code z
Coordinate p
NN
SDF

z space (Continuous Parameterized Space)

Exploration & Interpolation
Mapping: z ↔ x

latent space analysis
Clustering & Sampling(DOE) & Filtering

secondary generation data

x: design
y: performance
z: latent code

Fig. 5B

Reference Data

2D/3D shape data    2D/3D Pattern data    2D/3D Skel. or Graph data

$[x,y,z]=[0,0,1]$    $[x,y,z]=[1,1,1]$    $[x,y,z]=[1,0,1]$

Multi View data (shape, skel, depth, etc)

$f(x,y,z)=0$

Implicit model
(math or NN)

Pointcloud   Voxel   Mesh   Depth   Octree   SDF
data    data    data    data    data    data

Fig. 5C

(Y)

| Generative Design |
| --- |
| - Topology Optimization (SIMP, ESO, BESO, Level Set, MMC, Deep Learning, etc)<br><br>- Size/Shape Optimization<br><br>- Parametric Design<br><br>$$\min_x f(x) = PERF + \lambda SIM$$<br>$$\text{or}$$<br>$$\frac{df(x)}{d(x)} = \frac{dPERF}{dx} + \lambda SIM$$<br><br>- PERF : Performance optimization (all factors for evaluating a product, such as engineering performance, manufacturability, aesthetics, etc.)<br>- SIM : Similarity optimization (similarity to reference data)<br>- $\lambda$ : weights for determining similarity |

Fig. 5D

Fig. 6A

Fig. 6B

Fig. 6C

Fig. 6D

A    (A+B)/2    B        A    (A+B)/2    B

A

A

(A+B+C)/3

(A+B+C)/3

B        C        B        C

Fig. 7

start

S210
obtaining input data

S220
preprocessing input data

S221
obtaining pattern image

S222
obtaining skeleton image

S223
obtaining view image

S224
obtaining cross-section image

S225
obtaining black and white image

S230
providing preprocessed image

end

Fig. 8A

Fig. 8B

(1) Original → Cross Img

[x,y,z]=[0,0,1]
depth=50%

(2) Original → Depth Img

(3) Original → SDF

Fig. 9

start

S21
preprocessing second
reference data

S22
interpreting third reference data

S23
training design performance
prediction model

S24
predicting design performance

S25
prediction > criterion

NO

YES

S10
generating design

S27
adaptive sampling

S26
providing design performance
prediction model

end

Fig. 10

① automatic collection of interpretation data

② design performance prediction

Generated
Designs

Analysis
(Auto Labeling)

data
preprocessing

X
(Design)

Y
(Label)

① design requirement
② performance
③ manufacturability
⋮

interpretation
result

3D deep learning models
(Mesh/Voxel/Point Cloud/SDF based)    DPM

① design requirement    ② performance    ③ manufacturability
prediction          prediction          prediction
deep learning       deep learning       deep learning
models              models              models

Forward
Network

Forward
Network

Forward
Network

satisfying prediction
performance ?

YES    prediction
model

NO

adaptive
sampling

additional data
requirements

deep learning-based
design generation AI

data updates

Fig. 11

```
            ┌─────────┐
            │  start  │
            └─────────┘
                 │
                 ▼                        S31
    ┌──────────────────────────────────┐
    │ obtaining first target performance│
    └──────────────────────────────────┘
                 │
                 ▼                        S32
    ┌──────────────────────────────────┐
    │  obtaining first optimal design option │
    └──────────────────────────────────┘
                 │
                 ▼                        S33
    ┌──────────────────────────────────┐
    │ obtaining second optimal design option │
    └──────────────────────────────────┘
                 │
                 ▼
            ┌─────────┐
            │   end   │
            └─────────┘
```

Fig. 12

Fig. 13

Fig. 14

Fig. 15

customer evaluation

RANK BELOW WHEEL DESIGNS

evaluation data

design preference

$Pr(U_A > U_B)$

$\beta^T ( z_A - z_B)$

## INTERNATIONAL SEARCH REPORT

| International application No. |
| --- |
| **PCT/KR2023/006295** |

| A. | CLASSIFICATION OF SUBJECT MATTER |
| --- | --- |

**G06F 30/27**(2020.01)i; **G06F 30/17**(2020.01)i; **G06N 3/08**(2006.01)i; **G06N 3/04**(2006.01)i; **G06F 111/06**(2020.01)i

According to International Patent Classification (IPC) or to both national classification and IPC

| B. | FIELDS SEARCHED |
| --- | --- |

Minimum documentation searched (classification system followed by classification symbols)

G06F 30/27(2020.01); G06F 30/00(2020.01); G06N 20/00(2019.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 인공지능(artificial intelligence), 생성적 설계(generative design), 예측(prediction), 위상최적화(topology optimization), 유사성(similarity)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2022-0053963 A (CLEW INC.) 02 May 2022 (2022-05-02)<br>See paragraphs [0060]-[0102] and figure 6. | 1,3-6,8,9,11-18 |
| A | | 2,7,10 |
| Y | 강남우. 딥러닝응용: 제너레이티브 디자인. 2019년 인공지능 서머스쿨, 대한기계학회. 21 August 2019, non-official translation (KANG, Namwoo. Deep Learning Application: Generative Design. 2019 Artificial Intelligence Summer School, The Korean Society of Mechanical Engineers).<br>　　Retrieved from <http://www.smartdesignlab.org/DL/%EC%A0%9C%EB%84%88%EB%A0%88%EC%9D%B4%ED%8B%B0%EB%B8%8C%EB%94%94%EC%9E%90%EC%9D%B8_%EA%B8%B0%EA%B3%84%ED%95%99%ED%9A%8CAI%EC%84%9C%EB%A8%B8%EC%8A%A4%EC%BF%A82019_%EA%B0%95%EB%82%A8%EC%9A%B0_190821.pdf>.<br>　　See pages 59-64. | 1,3-6 |
| Y | OH, Sangeun et al. Deep Generative Design: Integration of Topology Optimization and Generative Models. Journal of Mechanical Design. Vol. 141, Issue 11, pp. 1-13, November 2019.<br>　　See pages 3-7. | 3-5,8,9,11-18 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **17 August 2023** | **17 August 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/006295**

### C.    DOCUMENTS CONSIDERED TO BE RELEVANT

| Category* | Citation of document, with indication, where appropriate, of the relevant passages | Relevant to claim No. |
|---|---|---|
| Y | KIM, Seongsin et al. Deep learning-based inverse design for engineering systems: multidisciplinary design optimization of automotive brakes. pp. 1-25, February 2022.<br>　　　Retrieved from <https://ui.adsabs.harvard.edu/abs/2022arXiv220213309K/abstract>.<br>　See pages 6-7. | 5,17,18 |
| A | KR 10-2020-0060238 A (THE BOEING COMPANY) 29 May 2020 (2020-05-29)<br>　See paragraphs [0023]-[0040] and figure 1. | 1-18 |

## INTERNATIONAL SEARCH REPORT
### Information on patent family members

International application No.

**PCT/KR2023/006295**

| Patent document cited in search report | | | Publication date (day/month/year) | Patent family member(s) | | | Publication date (day/month/year) |
|---|---|---|---|---|---|---|---|
| KR | 10-2022-0053963 | A | 02 May 2022 | None | | | |
| KR | 10-2020-0060238 | A | 29 May 2020 | CN | 111209634 | A | 29 May 2020 |
| | | | | EP | 3657446 | A1 | 27 May 2020 |
| | | | | JP | 2020-087432 | A | 04 June 2020 |
| | | | | JP | 7319141 | B2 | 01 August 2023 |
| | | | | US | 11288414 | B2 | 29 March 2022 |
| | | | | US | 2020-0159886 | A1 | 21 May 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 102079027